# EUROPÄISCHE PATENTSCHRIFT

(11) **EP 2 991 857 B1**
(45) Veröffentlichungstag und Bekanntmachung des Hinweises auf die Patenterteilung: **08.02.2017**
(21) Anmeldenummer: 14718002.0
(22) Anmeldetag: 11.04.2014
(51) Int. Cl.: B60P 3/025, E04H 3/10, E04B 1/343

(54) **VERANSTALTUNGSPAVILLON UND PAVILLONELEMENT ZUM AUFBAU EINES SOLCHEN VERANSTALTUNGSPAVILLONS**
EVENTS PAVILION AND PAVILION ELEMENT FOR CONSTRUCTING AN EVENTS PAVILION OF THIS KIND
PAVILLON POUR MANIFESTATIONS ET UNITÉ DE PAVILLON POUR LA CONSTRUCTION D'UN TEL PAVILLON

(30) Priorität: 29.04.2013 DE 202013003966 U
(43) Veröffentlichungstag der Anmeldung: 09.03.2016
(73) Patentinhaber: Bischoff & Scheck AG, 77836 Rheinmünster/Baden Airpark (DE)
(72) Erfinder: BISCHOFF, Bernd, 77836 Rheinmünster/Baden Airpark (DE)
(74) Vertreter: Munk, Ludwig Hubert
(86) Internationale Anmeldenummer: PCT/EP2014/000976
(87) Internationale Veröffentlichungsnummer: WO 2014/177249

(56) Entgegenhaltungen:
- ES-A1- 2 291 146
- US-A- 2 901 282
- US-A- 4 232 488
- US-A- 5 280 985
- US-A- 6 003 919
- US-A1- 2013 067 829

## Beschreibung

Die Erfindung betrifft ein Pavillonelement zum Aufbau eines Veranstaltungspavillons gemäß dem Oberbegriff des Anspruchs 1, sowie einen aus solchen Pavillonelementen aufgebauten Veranstaltungspavillon.

Schon die insbesondere in den USA verbreiteten "Mobile home"-Trailer wurden mit zur Seite hin ausfahr- bzw. ausziehbaren Erweiterungselementen versehen, um den nutzbaren Wohnraum im aufgestellten Zustand gegenüber einem Transportzustand zur Seite hin zu vergrößern, siehe beispielhaft die US-Patentschriften US 2,901,282 und US 6,003,919.

Mittlerweile haben sich verschiedene Anwendungen entwickelt, die auf solchen Fahrzeuganhängern oder allgemein Containern mit seitlich vergrößerbarem Innenraum beruhen. So ist der europäischen Patentschrift EP 0 407 536 B1 (deutsche Übersetzung DE 690 04 018 T2) schon ein solcher seitlich ausziehbarer Fahrzeuganhänger zu entnehmen, der sich zur schnellen Errichtung eines Ausstellungsstands oder eines Wanderkinos eignet und zwei zur Seite hin ausfahrbare Erweiterungszellen aufweist, wobei der Boden im Zentralbereich angehoben werden kann, um den zum Einziehen der Erweiterungszellen nötigen Platz zu schaffen. Die US-Patentschrift US 7,794,001 B2 offenbart ein aus solchen seitlich ausziehbaren Fahrzeuganhängern schnell errrichtbares, mobiles Feldlazarett.

Weiterhin bekannt ist der Einsatz enttsprechend augerüsteter Fahrzeuganhänger als mobile Pavillonelemente zum Aufbau eines Veranstaltungspavillons.

Solche Veranstaltungspavillons werden beispielsweise bei Rennsportveranstaltungen von den Betreibern der einzelnen Rennställe aufgebaut. Dabei wird besonderes Augenmerk darauf gerichtet, dass der Veranstaltungspavillon schnell auf- und abgebaut werden kann und ein repräsentatives Äußeres aufweist.

Um den schnellen Auf- und Abbau zu bewerkstelligen ist es bekannt, solche Pavillonelemente entweder einzeln oder zu mehreren gruppiert zu verwenden, um einen Veranstaltungspavillon zu errichten. Diese Pavillonelemente weisen einen Transportzustand auf und einen Veranstaltungszustand. Jedes Pavillonelement ist dabei so ausgebildet, dass es in seinem Transportzustand einen transportablen Container bildet, welcher auf der Straße zum Veranstaltungsort gefahren werden kann und ein in etwa quaderförmiges Transportvolumen mit einer in etwa rechteckigen Grundfläche beansprucht, etwa einen als LKW-Auflieger gestalteten, transportablen Container. Der transportable Container bzw. das Pavillonelement dieser Art weist eine Auflagestruktur zur Auflage auf einem Untergrund auf, also beispielsweise ein Fahrwerk und eine Aufliegerkupplung zum Koppeln an die Zugmaschine eines LKWs. Ferner weisen solche Pavillonelemente eine starre, in etwa quaderförmige, auf der Auflagestruktur aufsitzende und als Ganzes in dem Transportvolumen untergebrachte Trägerstruktur mit gleichen oder kleineren Abmaßen als das Transportvolumen auf, wobei die Basiszelle oder Trägerstruktur eine im Transportzustand geschlossene oder zumindest im Wesentlichen geschlossene Containeraußenhülle trägt.

Das Pavillonelement ist somit in seinem Transportzustand zu einem transportablen Container zusammengefügt, der sein Inneres gegen Witterungseinflüsse kapselt und alle Einzelteile des Pavillonelements raumreduziert aufnimmt, so dass sich das Pavillonelement gut transportieren lässt.

In dem Transportvolumen, also während des Transports von der Containeraußenhülle umschlossen, ist ferner ein ausfahrbarer Bühnen- oder Erweiterungsboden aufgenommen, der einen Teil der Veranstaltungsfläche seitlich neben dem Transportvolumen bildet, wenn er ausgefahren wird.

Bekannt sind beispielsweise Pavillonelemente der Anmelderin, bei denen der Erweiterungsboden als Bühne oder als Teil einer Bühne oberhalb des Fahrwerks des Pavillonelements waagrecht aus dem Transportzustand in den Veranstaltungszustand ausfahrbar ist, so dass im Veranstaltungszustand eine Veranstaltungsfläche, Bühne oder Präsentationsfläche neben dem Transportvolumen geschaffen ist. Werden zwei als LKW-Auflieger gestaltete Pavillonelemente dieser Art in dem durch die Breite der beiden Erweiterungsböden vorgegebenen Abstand nebeneinander gestellt, so kann dadurch die Basis für einen Veranstaltungspavillon vorgegebenen werden, der eine durch die beiden Erweiterungsböden der beiden Pavillonelemente geschaffenen Bühnenbereich zwischen den LKW-Aufliegern aufweist. Durch Überdachung des Bühnenbereichs zwischen den Pavillonelementen mittels Planen oder dergleichen wird dann ein Veranstaltungspavillon geschaffen, welcher das Innere der beiden Pavillonelemente mit umfassen kann, wenn ihre einander zugewandten Seitenwände abnehmbar oder mit Türe oder dergleichen versehen sind.

Weiterhin sind auch schon Fahrzeuganhänger bekannt, welche auf ein erhöhtes Niveau nach oben und dann dort zur Seite hin ausfahrbare Seitenerweiterungen aufweisen. Bei dem in der US-Patentschrift US 5,280,985 gezeigten Fernsehaufnahmestudio und bei dem in der US-Patentschrift 5,185,973 gezeigten Fahrzeuganhänger ist dabei eine Grundzelle mitsamt den Seitenerweiterungszellen anhebbar auf einem Fahrgestell des Anhängers montiert. Ähnliches zeigt die US-Patentanmeldung US 2013/0067829 A1. Zum Ausbreiten wird also zunächst die Grundzelle mitsamt den Seitenerweiterungszellen angehoben. Danach können die Seitenerweiterungszellen zur Seite hin ausgefahren werden, um insgesamt einen seitlich vergrößerten, Aufenthaltsraum auf Höhe des ersten Stocks zu schaffen.

Die an den Hubantrieben auftretenden Lasten sind dabei allerdings erheblich und der Abstützung der Seitenerweiterungszellen muss dabei schon aus Sicherheitsgründen ein besonderes Augenmerk gewidmet werden.

Einen für ein gattungsgemäßes Pavillonelement geeigneten Fahrzeuganhänger offenbart ferner die spanische Patentanmeldung ES 2 291 146 A1. Aus dem zum Transportvolumen eingefahrenen Anhänger lässt sich dabei eine Grundzelle vertikal nach oben verschieben. Ferner sind seitliche Erweiterungsterassen vorgesehen, mit denen sich die nach oben verschobene Grundzelle seitlich erweitern lässt. Die Erweiterungsterassenböden sind dabei an einem starren Trägergerüst angelenkt und werden zum Ausbreiten der Erweiterungsterassen aus einer vertikal nach unten hängenden Stellung in eine horizontale Stellung verschwenkt.

Hiervon ausgehend ist es Aufgabe der vorliegenden Erfindung, ein Pavillonelement bereitzustellen, welches im Leichtbau betriebssicher eine ansprechende Gestaltung des aus solchen Pavillonelementen aufgebauten Veranstaltungspavillons erlaubt, sowie ein Veranstaltungspavillon mit einer alternativen, ansprechenden Gestaltung zu schaffen.

Diese Aufgabe wird hinsichtlich des Pavillonelements mit den Merkmalen des Anspruchs 1 gelöst, hinsichtlich des Veranstaltungspavillons mit den Merkmalen des Anspruchs 14 oder 15.

Das erfindungsgemäße Pavillonelement weist gemäß Anspruch 1 eine starre und als Ganzes in einem Transportvolumen untergebrachte Trägerstruktur auf, an der ein aus dem Transportvolumen heraus und in das Transportvolumen hinein beweglich gelagerter, an einer in einer seitlichen Erweiterungsrichtung gelegenen Erweiterungsseite neben der Grundfläche ausbreitbarer und in dem Transportvolumen unterbringbarer Erweiterungsboden insgesamt oder zumindest mit seiner Bodenträgerstruktur in Horizontalrichtung verfahrbar aufgenommen ist, so dass sich der Erweiterungsboden im Veranstaltungszustand in etwa auf Höhe der Oberseite des Transportvolumens ausbreitet.

Es ist also ein insgesamt oder zumindest mit seiner gewichtsmäßig maßgeblichen Bodenträgerstruktur horizontal ausfahrbar an der Oberseite der Trägerstruktur gelagerter Erweiterungsboden vorgesehen. Die Bodenträgerstruktur für den Erweiterungsboden kann dabei Ausschubstangen umfassen, die in Linearführungsschienen in Erweiterungsrichtung verschiebbar geführt aufgenommen sind, wobei die Linearführungsschienen wiederum an in Erweiterungsrichtung verlaufenden Deckenträgern der Trägerstruktur befestigt sind und sich unterhalb der Bodenebene des Erweiterungsbodens bzw. des Geschoßbodens erstrecken.

Der Erweiterungsboden ist also so an dem Pavillonelement angebracht, dass er sich im Veranstaltungszustand in etwa auf Höhe der Oberseite des Transportvolumens ausbreitet, und zwar vorzugsweise auf einer langen Seite der Grundfläche. Es gelingt somit eine Gestaltung des Veranstaltungspavillons, bei der zwei dieser Pavillonelemente mit ihren in Erweiterungsrichtung weisenden Seiten parallel nebeneinander und mit einem solchen Abstand angeordnet sind, dass die Erweiterungsböden der beiden Pavillonelemente im Veranstaltungszustand aneinander grenzen und eine gemeinsame Veranstaltungsfläche bilden, und zwar in etwa auf Höhe der Oberseite des Transportvolumens.

Die Veranstaltungsfläche befindet sich somit in einem gegenüber der Umgebung um die Höhe des Transportvolumens erhöhten Bereich, was besonders dann gewünscht sein kann, wenn es sich dabei um eine Bühne handelt, auf der beispielsweise Shows stattfinden oder Skulpturen oder andere Gegenstände, z.B. Lichtinstallationen oder dergleichen ausgestellt werden sollen, die dann weithin zu sehen sind. Zum Anderen ergibt sich auch ein besonderer Reiz für das Publikum, wenn die Veranstaltungsfläche als für die Teilnehmer der Veranstaltung betretbare Fläche übermannshoch über dem Erdboden bereit gestellt wird. Zudem kann durch die erfindungsgemäße Gestaltung des Pavillonelements auch eine Veranstaltung auf zwei Geschoßen stattfinden, wobei beispielsweise auf der durch die Erweiterungsböden der Pavillonelemente geschaffene Veranstaltungsfläche eine Installation, wie z.B. ein überdimensionales Firmenlogo aufgestellt werden kann und die eigentliche Veranstaltung überdacht unterhalb der Erweiterungsböden stattfinden kann. Es ergibt sich eine Vielzahl von weiteren denkbaren Einsatzmöglichkeiten, beispielsweise die Schaffung eines Veranstaltungspavillons mit einer eine Brücke über einer Rennstrecke oder dergleichen überbrückenden Veranstaltungsfläche, die Schaffung eines überdachten Eingangsbereichs unterhalb der eigentlichen Veranstaltung, etc.

Dabei sind den Außenabmaßen des Transportvolumens und insbesondere seiner Höhe praktische Grenzen gesetzt, da sich das Pavillonelement auf der Straße zum Veranstaltungsort transportieren lassen muss. Bevorzugt weist das Pavillonelement in seinem Transportzustand daher in etwa die Außenabmaße eines LKW-transportierbaren Frachtcontainers oder eines LKW-Aufliegers auf.

Eine weitere vorteilhafte Weiterbildung des erfindungsgemäßen Pavillonelements betrifft einen sich im Veranstaltungszustand in etwa auf Höhe des Erweiterungsbodens im Bereich senkrecht oberhalb der Grundfläche erstreckenden Geschoßbodens, der im Transportzustand ebenfalls im Transportvolumen untergebracht ist und die Veranstaltungsfläche somit um eine Fläche senkrecht oberhalb der Grundfläche erweitert.

Dadurch, dass sich der Erweiterungsboden in etwa auf Höhe der Oberseite des Transportvolumens befindet, kann der Geschoßboden einfach als eine Anzahl einstückiger, auf Deckenträgern der Trägerstruktur aufliegender Plattenelemente ausgebildet sein oder als eine Abdeckung der Trägerstruktur formende Plattenelemente.

Die Trägerstruktur des Pavillonelements kann dabei eine Auflagestruktur zur Auflage auf einem Untergrund und ein auf der Auflagestruktur aufgebautes, sich nach oben erstreckendes Stützträgergerüst aufweisen, auf dem der Geschoßboden aufliegt. Die Trägerstruktur trägt dabei bevorzugt eine Containeraußenhülle.

Der Erweiterungsboden könnte dabei als fest mit der Bodenträgerstruktur verbundenen Bodenplatte ausgebildet sein, wobei dann jedoch an der Trennfuge zwischen Geschoßboden und Erweiterungsboden ein Absatz wäre, über den die Veranstaltungsgäste stolpern könnten und wobei der Geschoßboden dann eine sehr tragfähige, den Erweiterungsboden freitragend überspannende Bodenplatte bräuchte. Bevorzugt ist es daher, wenn der Erweiterungsboden als Klappboden ausgebildet ist und somit auf die ausgefahrene Bodenträgerstruktur aufgelegt werden kann, ohne in einer Ebene unterhalb oder oberhalb des Geschoßbodens horizontal verfahrbar sein zu müssen. Bevorzugt sind die Oberseiten von Geschoßboden und Erweiterungsboden dabei also bündig zueinander angeordnet. Der als Klappboden ausgebildete Erweiterungsboden kann dabei aus einer beliebigen Anzahl von Plattenelementen gebildet werden, die jedoch im Transportvolumen verstaubar sein müssen.

Die Ausschubstangen der Bodenträgerstruktur für den Erweiterungsboden können dabei vorteilhaft als Zahnstangen ausgebildet sein, welche über einer gemeinsamen, sich quer zur Erweiterungsrichtung horizontal erstreckenden Antriebswelle antreibbar sind. Zum Antrieb der Antriebswelle kann wiederum ein im Transportvolumen aufgenommener Motor, vorzugsweise Elektromotor vorgesehen sein, der somit gegen Witterungseinflüsse geschützt ist und beispielsweise über eine Kette oder einen Zahnriemen an der Antriebswelle angreifen kann.

Bevorzugt weist der Geschoßboden dabei eine Ausnehmung auf, durch die ein im Transportvolumen befindlicher Treppenaufgang geführt ist. Der Geschoßboden kann dabei gleichzeitig im Transportzustand das Dach des Containers bilden. In diesem Fall könnte die Ausnehmung für den Treppenaufgang beispielsweise mit einer Klappe abgedeckt sein. Der Erweiterungsboden könnte dann an einer auf der Erweiterungsseite gelegenen Kante des das Dach bildenden Geschoßbodens angelenkt sein und sich im Transportzustand als Seitenwand der Containeraußenhülle entlang eines Seitenwandabschnitts der Deckenträgerstruktur erstrecken oder auf das Dach bzw. dem Geschoßboden abgelegt sein.

Gemäß einer bevorzugten Weiterbildung der Erfindung ist jedoch die Containeraußenhülle aus dem Transportzustand nach oben und dann in Erweiterungsrichtung zur Seite hin in den Veranstaltungszustand austeleskopierbar ausgebildet, so dass ein sich oberhalb des Geschoßbodens und des Erweiterungsbodens befindlicher Teil des Veranstaltungsraums vollständig überdacht ist. Bevorzugt lässt sich die Außenhülle dabei zu einer in etwa L-förmigen, zumindest bis auf Fenster- und Personendurchlässe mehrseitig geschlossenen, vollständig überdachten Form austeleskopieren. Weiter bevorzugt im Sinne eines aus zwei nebeneinander angeordneten Pavillonelementen aufbaubaren Veranstaltungspavillons ist es dabei, wenn die Außenhülle auf der zur Erweiterungsrichtung hin gelegenen Seite zumindest im ersten Stock, also im Veranstaltungszustand, bevorzugt entweder keine, eine abnehmbare, eine als aufrollbare Plane oder Rollladen ausgebildete oder weiter bevorzugt eine aus einzelnen, gegeneinander verschiebbar aufgenommenen Plattenelementen bestehende, zusammenschiebbare Seitenwand aufweist, so dass die durch die beiden nebeneinander stehenden Pavillonelemente geschaffenen Räume zu einem gemeinsamen Veranstaltungsraum oberhalb der Veranstaltungsfläche verbunden sind.

Alternativ zu einer als geschlossene Hülle austeleskopierbaren, den Veranstaltungsraum mehrseitig umschließenden Außenhülle wäre es auch denkbar, den Veranstaltungsraum lediglich zu überdachen oder auch nur bestimmte Bereiche des Veranstaltungsraums.

So könnte beispielsweise ein an der Trägerstruktur beweglich angebrachtes, im Transportzustand im Transportvolumen untergebrachtes Basisdach vorgesehen sein, welches zum Auf- und Abbau des Veranstaltungspavillons aus dem Transportvolumen heraus bzw. in das Transportvolumen hinein vertikal aus- und einfahrbar auf der Trägerstruktur abgestützt ist, um in einem vertikal ausgefahrenen Zustand den sich oberhalb der Grundfläche befindenden Teil der Veranstaltungsfläche zu überdachen.

Alternativ oder ergänzend dazu könnte ein an dem Pavillonelement beweglich angebrachtes, in Transportzustand im Transportvolumen untergebrachtes und zum Aufbau des Veranstaltungspavillons durch Bewegung aus dem Transportvolumen heraus oberhalb des ausgebreiteten Erweiterungsboden ausbreitbares und durch Bewegung in das Transportvolumen hinein abbaubares Erweiterungsdach vorgesehen sein, um einen sich oberhalb des ausgebreiteten Erweiterungsbodens befindenden Teil der Veranstaltungsfläche zu überdachen. Bevorzugt schließt das Erweiterungsdach in seinem ausgebreiteten Zustand dabei an das vertikal ausgefahrene Basisdach an, wobei das Erweiterungsdach weiter bevorzugt in auf dem Basisdach angebrachten Linearführungen in der Erweiterungsrichtung aus- und einziehbar aufgenommen ist.

Selbstverständlich sind auch Zwischenlösungen denkbar, bei denen zwar im Veranstaltungszustand keine vollständig geschlossene Außenhülle vorgesehen ist, neben der Überdachung jedoch auch noch geschlossene Seitenwände zumindest an den beiden sich längs der Erweiterungsrichtung erstreckenden Seiten, die den Abstand zwischen dem Basisdach und dem Geschoßboden bzw. zwischen dem Erweiterungsdach und dem Erweiterungsboden als geschlossene Seitenwände bzw. Seitenwandabschnitte überbrücken.

Vorteilhaft ist dabei das Basisdach und zumindest die beiden sich längs der Erweiterungsrichtung erstreckenden Seitenwände oder vertikale Stützstrukturen an diesen Seiten zu einer starren, vorzugsweise mehrseitig geschlossenen Dachzelle verbunden, die als Ganzes im Transportzustand im Transportvolumen untergebracht und zum Auf- und Abbau des Veranstaltungspavillons aus dem Transportvolumen heraus bzw. in das Transportvolumen hinein vertikal aus- und einfahrbar auf der Trägerstruktur abgestützt ist, um im Veranstaltungszustand den sich oberhalb der Grundfläche befindenden Teil der Veranstaltungsfläche mehrseitig zu umgrenzen und vorzugsweise einzuhüllen.

Die Dachzelle kann dann an den beiden sich längs der Erweiterungsrichtung erstreckenden Seiten jeweils eine geschlossene Seitenwand aufweisen, auf der in Erweiterungsrichtung gelegenen Seite offen sein, und an der entgegen der Erweiterungsrichtung gelegenen Seite eine abnehmbare, eine als aufrollbare Plane oder Rollladen ausgebildete oder weiter bevorzugt eine einzelne, gegeneinander verschiebbar aufgenommene Plattenelemente aufweisende, zusammenschiebbare Seitenwand aufweisen. Dadurch kann beim Aufbau des Veranstaltungspavillons nicht nur auf der in Erweiterungsrichtung gelegenen Seite ein zweites Pavillonelement angebaut werden, sondern, nach Öffnung der an der entgegen der Erweiterungsrichtung gelegenen Seite vorgesehenen Seitenwand, auch auf dieser Seite ein weiteres Pavillonelement, so dass die vom Pavillon bereit gestellte Veranstaltungsfläche weiter vergrößert werden kann.

Analog zu der vertikal ausfahrbaren Dachzelle kann das Erweiterungsdach und zumindest zwei sich längs der Erweiterungsrichtung erstreckende Seitenwände oder vertikale Stützstrukturen an diesen Seiten zu einer starren, vorzugsweise mehrseitig geschlossenen Erweiterungszelle verbunden sein, die als Ganzes im Transportzustand im Transportvolumen untergebracht ist und zum Auf- und Abbau des Veranstaltungspavillons aus dem Transportvolumen heraus bzw. in das Transportvolumen hinein bewegbar aufgenommen ist. Die Erweiterungszelle kann dabei bei vertikal ausgefahrenem Zustand des Basisdachs bzw. der Dachzelle in Erweiterungsrichtung horizontal aus- und einfahrbar aufgenommen sein, und zwar entweder direkt an der Trägerstruktur, oder über eine Lagerung an der Dachzelle letztlich auch auf der Trägerstruktur, oder auch an diesen beiden Strukturelementen des Pavillonelements.

Vorteilhaft im Sinne einer platzsparenden Anordnung und einer guten Abdichtbarkeit der Trennfuge zwischen dem Basisdach und dem Erweiterungsdach sind das Basisdach und das Erweiterungsdach als überlappende Lagen nach Art eines Schiebedachs ausgebildet. Das heißt, dass das Basisdach und das Erweiterungsdach im Transportzustand und im vertikal ausgefahrenen Zustand der Dachzelle bei horizontal nicht ausgefahrener Erweiterungszelle als einander überlappende, gegeneinander verschieblich angeordnete Lagen ausgebildet sind, wobei das Erweiterungsdach vorzugsweise über Linearführungen auf dem Basisdach gelagert ist.

Die Erweiterungszelle kann also beispielsweise als nach unten offene, in etwa U-förmige Einheit ausgebildet sein, die auf der entgegen der Erweiterungsrichtung gelegenen Seite offen ist und auf der in Erweiterungsrichtung gelegenen Seite ebenfalls offen sein kann oder mit einer abnehmbaren Seitenwand versehen ist. Ebenfalls denkbar wäre es, die Erweiterungszelle mit einem horizontal ausfahrbaren Boden oder einer Tragekonstruktion für den Boden zu verbinden.

Die Dachzelle kann wie die Erweiterungszelle als in etwa U-förmige, nach unten offene Einheit aufgebaut sein, die an ihrer in Erweiterungsrichtung gelegenen Seite offen ist und auf ihrer entgegen der Erweiterungsrichtung gelegenen Seite mit einer starren Seitenwand verschlossen oder mit einer abnehmbaren Seitenwand verschlossen. Theoretisch wäre es denkbar, die Dachzelle mit dem Geschoßboden zusammen in Vertikalrichtung verfahrbar auf der Trägerstruktur abzustützen. In praktischer Hinsicht ist es jedoch deutlich vorteilhafter, den Geschoßboden fest auf der Trägerstruktur zu verankern und die Dachzelle lediglich aus den angegebenen Seitenwänden und dem Basisdach bestehen zu lassen. Dann kann an dem Geschoßboden auch ein in Horizontalrichtung ausfahrbarer Erweiterungsboden oder eine in Horizontalrichtung ausfahrbare Unterkonstruktion des Erweiterungsbodens verschiebbar gelagert sein, wobei "an dem Geschoßboden verschiebbar gelagert" beispielsweise dadurch realisiert sein kann, dass an in Erweiterungsrichtung verlaufenden Deckenträgern der Trägerstruktur unterhalb der Bodenebene des Erweiterungsbodens geführte Ausschubstangen in Erweiterungsrichtung verschiebbar gelagert sind, welche Ausschubstangen mit der Erweiterungszelle insgesamt verbunden sein können oder zumindest eine Unterstruktur für den Erweiterungsboden bilden können.

Bevorzugt bilden die in den Linearführungsschienen verschiebbar geführt aufgenommenen Ausschubstangen gleichzeitig einen Teil des Antriebsstrangs zum horizontalen Aus- und Einfahren der Erweiterungszelle. Dabei ist zu berücksichtigen, dass die Erweiterungszelle gegenüber den Ausschubstangen vertikal verfahrbar sein muss. Die Ausschubstangen können dafür an ihren freien Enden beispielsweise eine Verriegelungseinrichtung aufweisen, mit der sie an der Unterseite der sich auf der in Erweiterungsrichtung erstreckenden Seitenwand der Erweiterungszelle befestigt oder von dieser Seitenwand gelöst werden können. Ferner wäre es denkbar, die Ausschubstangen oder allgemein die Bodenträgerstruktur des Erweiterungsbodens mit Freiheitsgrad in vertikaler Richtung an der Erweiterungszelle zu befestigen, beispielsweise mit Gleitsteinen oder Rollen, die in Vertikalführungsschienen an den beiden sich längs der Erweiterungsrichtung sich erstreckenden Seitenwänden der Erweiterungszelle aufgenommen sind und an den Außenenden der beiden diesen Seitenwänden zugewandten Ausschubstangen befestigt sind.

Bei auf Straßen transportablen Containern sollte die Breite die maximale Spurbreite von 2,5 m nicht überschreiten. Entsprechend limitiert ist somit auch die maximale, horizontale Auszugslänge der Ausschubstangen, will man diese nicht teleskopierbar gestalten (was im Rahmen der Erfindung jedoch durchaus denkbar wäre). Auch in der Höhe sind im Straßenverkehr transportierbaren Transportcontainern durchaus Grenzen gesetzt und damit insbesondere auch der maximalen vertikalen Verfahrhöhe der Dachzelle bzw. des Abstands zwischen Basisdach und Geschoßboden. Da der Erweiterungsboden auf der Bodenträgerstruktur aufliegen soll, ist die Höhe zwischen der Bodenebene der Veranstaltungsfläche und der Dachebene oberhalb der Veranstaltungsfläche dabei der limitierende Faktor für die Höhe des Erweiterungsbodens, die dieser in seinem vertikal zusammengeklappten Zustand einnehmen kann.

Ein aus lediglich einem Plattensegment bestehender Klappboden, der an seinem unteren Ende an der Dachzelle angelenkt ist, wäre somit zwar denkbar, ebenso wie ein aus drei oder vier Plattensegmenten bestehender Klappboden. Im Verhältnis von der zur Verfügung stehenden Höhe für den im Transportzustand vertikal eingeklappten Boden und der im Veranstaltungszustand zu bedeckenden Breite hat es sich jedoch als besonders günstig herausgestellt, wenn der Klappboden zwei im Transportzustand vertikal und mit ihren großen Flächen aneinander liegend angeordnete Plattenelemente aufweist. Die Plattenelemente können dabei gelenkig miteinander verbunden sein, um im Veranstaltungszustand auf den Ausschubstangen bzw. der Bodenträgerstruktur aufliegen und beim Einfahren der Ausschubstangen nach oben wegklappen.

Das in Erweiterungsrichtung außen gelegene Plattenelement des Erweiterungsbodens kann dabei an den Außenenden der Ausschubstangen oder der in Erweiterungsrichtung gelegenen Seitenwand der Erweiterungszelle angebunden sein, beispielsweise angelenkt oder über eine Verriegelungseinrichtung nach dem vertikalen Ausfahren der Dachzelle und vor dem horizontalen Ausfahren der Erweiterungszelle anbringbar und nach dem horizontalen Einfahren der Erweiterungszelle beim Abbau des Veranstaltungspavillons wieder entriegelbar. Der Klappboden drückt dann beim Ausfahren die Erweiterungszelle in Erweiterungsrichtung nach außen und wird beim Einfahren über die Erweiterungszelle bzw. die Bodenträgerstruktur und somit letztlich über dem Antrieb für die horizontale Verfahrbarkeit der Erweiterungszelle zusammengeklappt. Vorteilhaft sind die Plattenelemente des zusammenklappbaren Erweiterungsbodens dabei in zusammengeklapptem, vertikal aufgerichteten Zustand miteinander verriegelbar und/oder an der Dachzelle oder der gemeinsam mit der Dachzelle vertikal verfahrbaren Erweiterungszelle arretierbar und somit gegen ein unerwünschtes Kippen oder dergleichen während dem vertikalen Verfahren beim Auf- oder Abbau des Veranstaltungspavillons gesichert.

Weitere vorteilhafte Weiterbildungen betreffen Maßnahmen zur Abdichtung der Trennfuge der beim horizontalen Aus- und Einfahren auf einander abgleitenden Dächer, also dem Basisdach und dem Erweiterungsdach. Dazu kann das Erweiterungsdach auf seiner entgegen der Erweiterungsrichtung liegenden Seite einen sich quer zur Erweiterungsrichtung erstreckenden Tragebalken aufweisen, auf dem das Erweiterungsdach mit einem zumindest einen Teil seiner Dachfläche bildenden, auf der entgegen der Erweiterungsrichtung gewandten Seite abgekanteten Flächenelement eingehängt ist, welches das Basisdach im Veranstaltungszustand überlappt. Das abgekantete Flächenelement kann dabei vorteilhaft als sich längs des Tragebalkens erstreckende Regenrinne ausgebildet sein. Ferner vorteilhaft können an dem Tragebalken Dichtlippen nach unten abstehen, welche beim Ein- und Ausfahren des Erweiterungsdachs das Basisdach abstreifen und im Erweiterungszustand bzw. Veranstaltungszustand den Bereich zwischen dem Tragebalken und dem Basisdach abdichten.

Auf der in Erweiterungsrichtung gelegenen Seite des Erweiterungsdachs kann ferner eine Befestigungseinrichtung, beispielsweise eine Kedernut vorgesehen sein, an der eine Plane beispielsweise mittels an den Seitenkanten der Plane verlaufenden Kedern eingehängt werden kann, um den Bereich, an dem die beiden Erweiterungsdächer zweier nebeneinander aufgestellter Pavillonelemente aufeinander treffen, zu überdachen, so dass im mittleren Bereich des Veranstaltungspavillons keine Feuchtigkeit durch die Trennfuge der beiden aneinander angrenzenden Erweiterungsdächer dringen kann. Dazu kann die Plane etwas durchhängen und an zumindest einer ihrer sich längs der Erweiterungsrichtung erstreckenden Seitenkanten mit einem Wasserdurchlass und einem daran anschließenden Fallrohr als Regenrinne ausgestaltet sein. Für das als Regenrinne gestaltete Dachelement des Erweiterungsdachs, das an dem Tragebalken eingehängt ist, können ebenfalls Fallrohre vorgesehen sein, die vorzugsweise in das Stützträgergerüst der Trägerstruktur integriert sind. Die Trägerstruktur kann ebenfalls durch regendichte Seitenwände mehrseitig umschlossen sein.

Die Erweiterungszelle, die Dachzelle und die Trägerstruktur sind dabei vorteilhaft so gestaltet, dass auch im Transportzustand möglichst gut abzudichtende Trennfugen mit fluchtenden Außenoberflächen vorgesehen sind. Beispielsweise kann die geschlossene Außenhülle im Transportzustand von dem Erweiterungsdach, den beiden sich längs der Erweiterungsrichtung erstreckenden Seitenwänden und der sich auf der in Erweiterungsrichtung gelegenen Seite erstreckenden Seitenwand der Erweiterungszelle, sowie der sich auf der entgegen der Erweiterungsrichtung gelegenen Seite erstreckenden Seitenwand der Dachzelle sowie einem Boden der Trägerstruktur gebildet sein. Dabei kann die Dachzellen-Seitenwand der Außenhülle nach oben über das Basisdach überstehen und mit dem Erweiterungsdach mit horizontal fluchtenden Außenoberflächen eine Trennfuge bilden. Dabei können die beiden sich längs der Erweiterungsrichtung erstreckenden Seitenwände der Erweiterungszelle und der Boden der Trägerstruktur ferner mit vertikal fluchtenden Außenoberflächen eine Trennfuge bilden. Eine solche Trennfuge kann selbstverständlich auch auf der in Erweiterungsrichtung gelegenen Seite und auf der entgegen der Erweiterungsrichtung gelegen Seite zwischen dem Boden der Trägerstruktur und Seitenwandelementen der Erweiterungszelle vorgesehen sein. Die Erweiterungszelle überstülpt im Transportzustand also auf den beiden sich längs der Erweiterungsrichtung sich erstreckenden Seiten, der in Erweiterungsrichtung gelegenen Seite und dachseitig das Transportvolumen, welches auf der entgegen der Erweiterungsrichtung gelegenen Seite von einer Seitenwand der Dachzelle und bodenseitig von der Trägerstruktur begrenzt wird. An den Trennfugen können dabei Dichtungen vorgesehen sein, um im Transportzustand ein Eindringen von Wasser in das Transportvolumen zu verhindern.

Die im Transportvolumen enthaltenen Teile, beispielsweise Elektromotoren für den Antrieb der teleskopierbaren Hülle sind dadurch vor Witterungseinflüssen geschützt.

So kann beispielsweise eine Anzahl Elektromotoren vorgesehen sein, die eine Anzahl von Gewindespindeln antreibt, über welche die vertikal aus- und einfahrbare Abstützung des Basisdachs bzw. der Dachzelle auf der Trägerstruktur realisiert ist, wobei mittels der Gewindespindeln vertikale Träger des Basisdachs bzw. der Dachzelle in Vertikalrichtung verfahrbar sind. Ist die Erweiterungszelle dabei wie vorstehend beschrieben über die Dachzelle gestülpt, so wird sie zusammen mit der Dachzelle vertikal aus- und eingefahren. Dabei ist es im Sinne einer möglichst kleinen Auslegung der Elektromotoren, wenn der Erweiterungsboden nicht zusammen mit der Dachzelle bzw. der Erweiterungszelle vertikal verfahren werden muss.

Weitere vorteilhafte Weiterbildungen sind Gegenstand von weiteren Unteransprüchen, die anhand der in den beiliegenden Zeichnungen dargestellten, bevorzugten Ausführungsformen der Erfindung näher erläutert werden. Es zeigen:
- Figur 1: eine schematisierte, perspektivische Ansicht eines Pavillonelements im Transportzustand;
- Figur 2: eine der Figur 1 entsprechende Ansicht des in Figur 1 gezeigten Pavillonelements mit vertikal austeleskopierter Außenhülle;
- Figur 3: eine den Figuren 1 und 2 entsprechende Ansicht des in den Figuren 1 und 2 gezeigten Pavillonelements mit vertikal und horizontal austeleskopierter Außenhülle, also im Veranstaltungszustand;
- Figur 4: einen aus zwei der in den Figuren 1 - 3 gezeigten Pavillonelementen aufgebauten Veranstaltungspavillon in schematisierter, perspektivischer Ansicht;
- Figur 5: einen aus zwei der in den Figuren 1 - 3 gezeigten Pavillonelementen und einem zwischengeordneten Pavillonelement aufgebauten Veranstaltungspavillon gemäß einer weiteren Ausführungsform der Erfindung in perspektivischer, schematisierter Ansicht;
- Figur 6: eine perspektivische Ansicht einer möglichen Gestaltung des Unterbaus der beiden zu dem in Figur 4 gezeigten Veranstaltungspavillon aufgebauten Pavillonelemente bei abgenommener Dach- und Erweiterungszelle;
- Figur 7: Einzelheit VII in Figur 6;
- Figur 8: eine ausgebrochene, perspektivische Teilansicht des in den Figuren 1-3 dagestellten Pavillonelements im Bereich der Trennfuge zwischen dem Basisdach und dem Erweiterungsdach im Veranstaltungszustand;
- Figur 9: eine perspektivische, ausgebrochene Teilansicht im Bereich der aneinander grenzenden Erweiterungsdächer der beiden Pavillonelemente des in Figur 4 gezeigten Veranstaltungspavillons;
- Figur 10: eine perspektivische Detailansicht einer höhenverfahrbaren Stütze der Dachzelle des in den Figuren 1-3 gezeigten Pavillonelements;
- Figur 11: eine perspektivische, ausgebrochene Teilansicht von schräg oben auf das in den Figuren 1-3 gezeigte Pavillonelement bei abgenommenem Basisdach und Erweiterungsdach im Veranstaltungszustand;
- Figur 12: eine perspektivische, ausgebrochene Teilansicht, welche einen Bodenaufstellhebel gemäß einer optionalen Fortbildung der in den Figuren 6 bis 11 gezeigten Pavillonelemente zeigt;
- Figur 13: eine perspektivische, ausgebrochene Teilansicht, welche eine Verriegelungseinrichtung gemäß einer optionalen Fortbildung der in den Figuren 6 bis 11 gezeigten Pavillonelemente im entriegelten Zustand zeigt; und
- Figur 14: eine Einzelansicht der in Fig. 3 gezeigten Verriegelungseinrichtung im verriegelten Zustand.

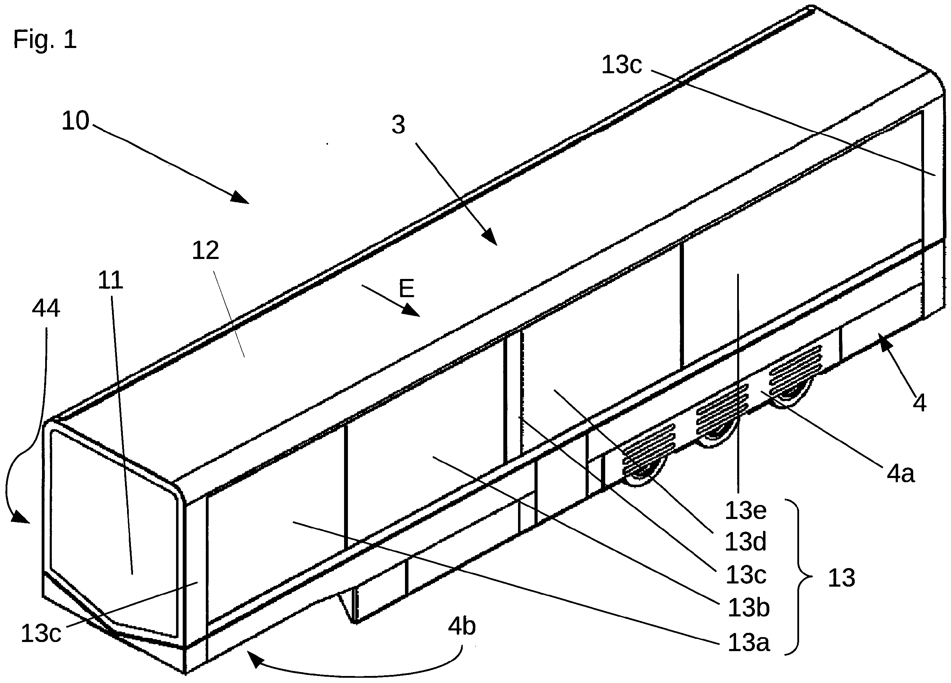

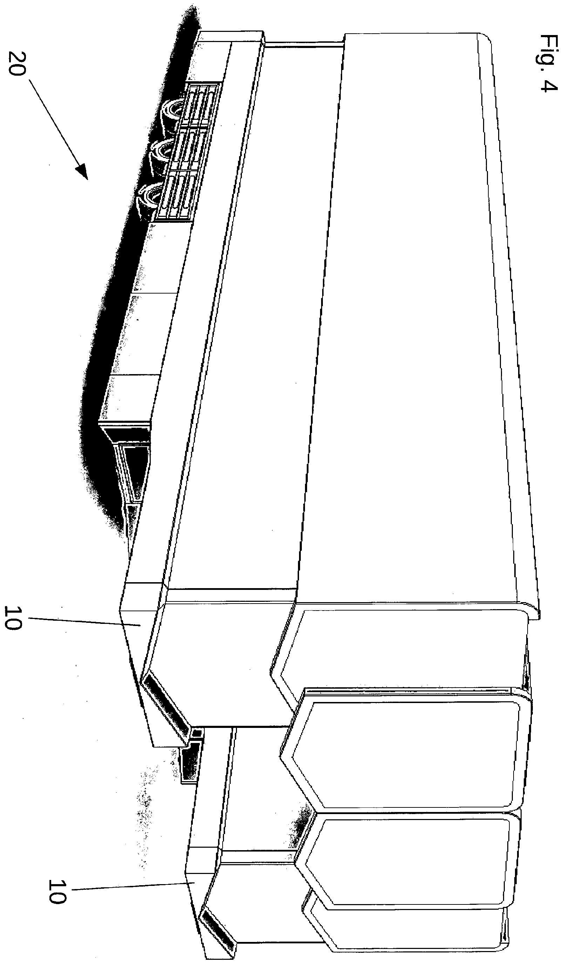

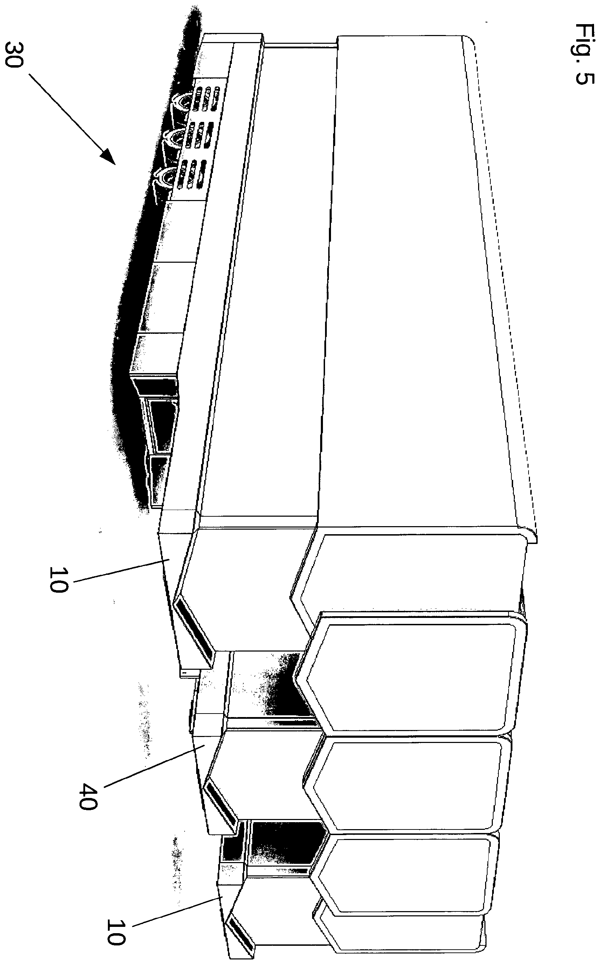

Zunächst wird Bezug genommen auf die Figuren 1 - 3, welche ein als LKW-Auflieger ausgestaltetes Pavillonelement 10 gemäß einer Ausführungsform der Erfindung in der Reihenfolge beim Aufbau eines Veranstaltungspavillons, wie er beispielsweise den Figuren 4 und 5 zu entnehmen ist, zeigen.

Das Pavillonelement 10 ist in Figur 1 in seinem raumreduzierten Transportzustand gezeigt, in dem es zu einem transportablen Container mit einem in etwa quaderförmigen Transportvolumen auf einer rechteckigen Grundfläche zusammengefügt und von einer geschlossenen Außenhülle umgeben ist. Die Außenhülle wird dabei im Transportzustand, wie nachstehend noch erläutert wird, von einem Erweiterungsdach 12, einer auf einer in eine Erweiterungsrichtung E gelegenen Seite vorgesehenen Seitenwand 13, einer auf der entgegen der Erweiterungsrichtung E vorgesehenen Seitenwand 44, sowie zwei sich entlang der Erweiterungsrichtung erstreckende Seitenwände 11 und einem nicht näher bezeichneten Boden gebildet. Dabei ist die Außenhülle in Vertikalrichtung teleskopierbar ausgebildet.

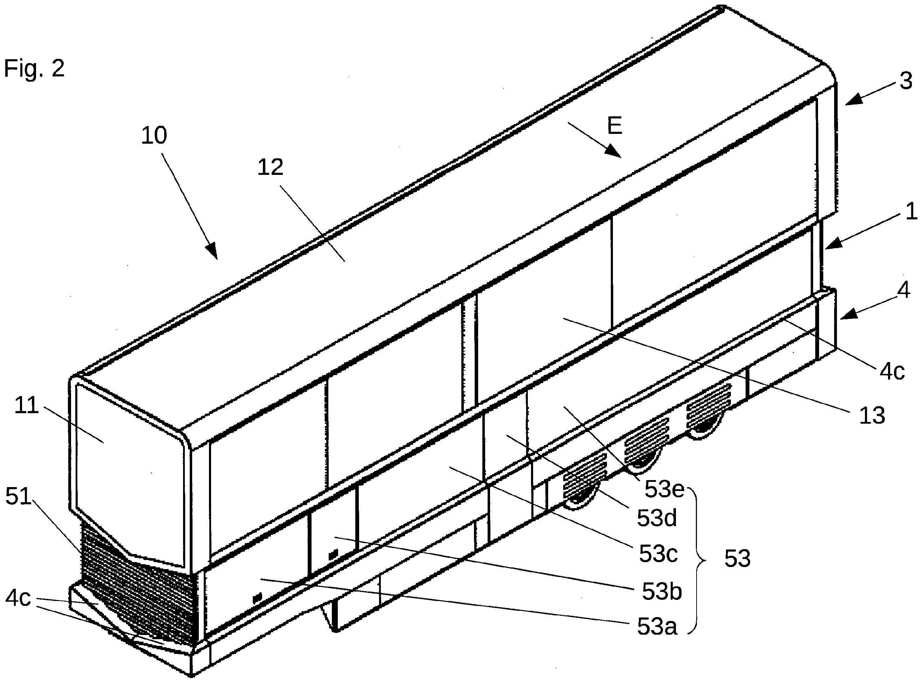

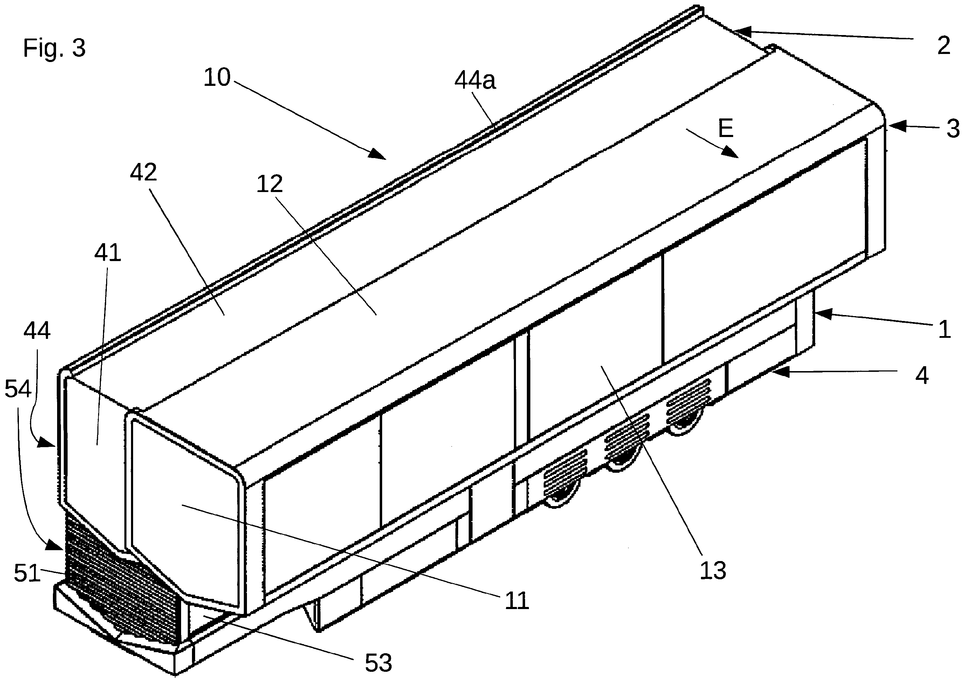

Figur 2 zeigt das Pavillonelement 10 mit in Vertikalrichtung austeleskopierter Außenhülle. Die Außenhülle ist ferner aus ihrer in Vertikalrichtung austeleskopierten Stellung weiter in Horizontalrichtung austeleskopierbar, so dass das Pavillonelement 10 in seinem ausgebreiteten Veranstaltungszustand eine Außenhülle mit der in Figur 3 gezeigten Form mit einem Querschnitt eines auf dem Kopf stehenden "L"s aufweist.

Die Außenhülle besteht dabei, wie insbesondere der Fig. 3 zu entnehmen ist, aus einer horizontal verfahrbaren Erweiterungszelle 3, einer vertikal verfahrbaren Dachzelle 2, sowie einer auf einer Auflagestruktur 4 ruhenden Trägerstruktur oder Basiszelle 1. Die Dachzelle 2 ist dabei zusammen mit der Erweiterungszelle 3 vertikal verfahrbar auf der Trägerstruktur 1 aufgenommen. Die Erweiterungszelle 3 ist wiederum horizontal in Erweiterungsrichtung E verfahrbar auf der Dachzelle 2 aufgenommen.

Die Erweiterungszelle 3 weist dabei ein Erweiterungsdach 12, eine in Erweiterungsrichtung E gewandte Seitenwand 13, sowie zwei sich längs der Erweiterungsrichtung E erstreckende Seitenwände 11 auf, die im raumreduzierten Transportzustand und im Veranstaltungszustand einen Teil der Außenoberfläche der Außenhülle bilden. Die Dachzelle 2 weist ein Erweiterungsdach 42, sowie zwei sich entlang bzw. parallel zur Erweiterungsrichtung E erstreckende Seitenwände 41 auf, die im Veranstaltungszustand (Fig. 3) Teil der Außenoberfläche der Außenhülle sind, im Transportzustand jedoch von der Erweiterungszelle 3 überdeckt werden. Die auf der entgegen der Erweiterungsrichtung E gelegenen Seite befindliche Seitenwand 44 der Dachzelle 2 bildet jedoch sowohl im Transportzustand als auch im Veranstaltungszustand einen Teil der Außenoberfläche der Außenhülle. Die Trägerstruktur 1 ist ebenfalls von geschlossenen Seitenwänden 51, 53, 54 seitlich umgeben, sowie unterseitig von einem abgeschlossenen Boden, der auf der Auflagestruktur 4 liegt oder Teil dieser Auflagestruktur bildet, mit der das Pavillonelement auf einem Untergrund ruht. Die Auflagestruktur 4 umfasst ein Fahrwerk 4a und eine Auflieger-Kupplung 4b (in Figur 1 angedeutet), so dass das Pavillonelement insgesamt als LKW-Auflieger ausgebildet ist. Die Außenhülle ist dabei nicht nur im in Figur 1 gezeigten Transportzustand, sondern auch in dem in Figur 3 gezeigten, vollständig austeleskopierten Veranstaltungszustand vollständig geschlossen, jedenfalls bis auf eine Bodenseite am Boden der Erweiterungszelle 3.

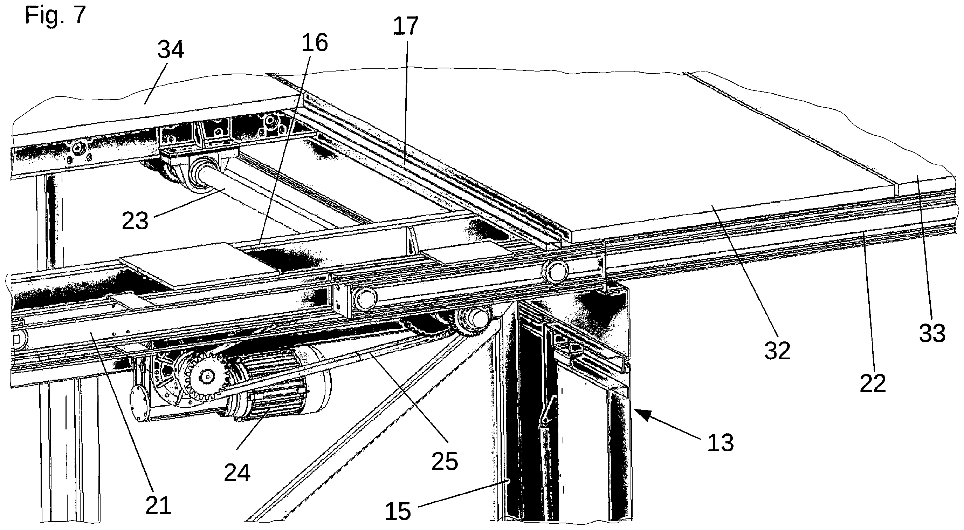

Wie im Weiteren noch näher erläutert werden wird und insbesondere in der Figur 7 im Einzelnen zu entnehmen ist, erstreckt sich dabei im Veranstaltungszustand (Fig. 3) in etwa auf Höhe der Oberseite des durch den zum raumreduzierten Transportzustand zusammengefügten Container gebildeten Transportvolumens ein Boden 32, 33, 34 über die Grundfläche, also die Standfläche des transportablen Containers und die durch die ausgeschobene Erweiterungszelle 3 umschlossene Erweiterungsfläche.

In dem in Fig. 3 gezeigten Veranstaltungszustand des Pavillonelements ist somit eine im ersten Stock befindliche, erhöhte Veranstaltungsfläche geschaffen, wobei der darüber befindliche, für eine Veranstaltung zur Verfügung stehende Veranstaltungsraum durch die austeleskopierte Außenhülle allseitig umhüllt und somit vor Blicken und Witterungseinflüssen geschützt ist.

Die Seitenwände der Erweiterungszelle 3, der Dachzelle 2, sowie der Trägerstruktur 1 können dabei massiv oder als auf entsprechenden, vorzugsweise fachwerkartig verstrebten Trägerstrukturen aufgenommene Planen, Folien oder Bleche ausgebildet sein. Insbesondere die in Erweiterungsrichtung E weisende Seitenwand 13 der Erweiterungszelle 3 lässt sich dabei öffnen und weist daher neben tragenden Wandabschnitten 13c verschiebbare oder abnehmbare Seitenwandsegmente 13a, 13b, 13d und 13e auf, die in Figur 1 im Einzelnen bezeichnet sind. Die in Erweiterungsrichtung E weisende Seitenwand an der Trägerstruktur 1 ist vorteilhaft ebenfalls zu öffnen und kann beispielsweise aus einzelnen Seitenwandsegmenten 53e, 53d, 53c und ausstellbaren Klappen 53b und 53a bestehen, wie in der Fig. 2 im Einzelnen angegeben ist, so dass der unterhalb der Bodenebene der Veranstaltungsfläche von der Trägerstruktur 1 umschlossene Technikraum, in dem sich die Antriebseinheiten für die teleskopierbare Außenhülle befinden, zu Revisionszwecken zugänglich ist.

Nimmt man zwei der in den Fig. 1 - 3 gezeigten Pavillonelemente 10 und stellt sie mit ihren in Erweiterungsrichtung weisenden Seiten zueinander hinweisend parallel nebeneinander in einem Abstand auf, der zweimal der horizontalen Verfahrbarkeit der Erweiterungszelle 3 entspricht, so kann ein in Figur 4 gezeigter Veranstaltungspavillon 20 geschaffen werden, der - bei Zusammenschieben oder Abnehmen der Seitenwände 13 der Erweiterungszellen 3 auf der jeweils in Erweiterungsrichtung E gelegenen Seite - einen durch die austeleskopierten Außenhüllen allseitig umschlossenen Veranstaltungsraum oberhalb der im ersten Stock liegenden Bodenebene aufweist, welcher doppelt so groß ist als der Veranstaltungsraum, der bei Verwendung von lediglich einem Pavillonelement zum Aufbau des Veranstaltungspavillons erhalten werden würde. Zudem hat der Veranstaltungspavillon 20 durch die Symmetrie seines Aufbaus eine gefällige und repräsentative Form, so dass er bei Veranstaltungen, wie z.B. Autorennen einsetzbar ist.

Einen alternativen Veranstaltungspavillon 30 zeigt Fig. 5, wobei dort ein weiteres Zentralpavillonelement 40 den beiden nebeneinander aufgestellten Pavillonelementen 10 gemäß Fig. 1 - 3 zwischengeordnet ist, so dass der sich oberhalb der Bodenebene im ersten Stock befindende und von der Außenhülle allseitig umgrenzte Veranstaltungsraum noch größer wird. Dabei kann das Zentralpavillonelement 40 den gleichen Aufbau wie die beiden Pavillonelemente 10 haben, wenn die sich in Auszugsrichtung erstreckende und die auf der entgegen der Auszugsrichtung gelegenen Seite erstreckende Seitenwand jeweils abnehmbar, zusammenschiebbar, aufrollbar etc. ausgebildet ist und bei dem Zentrallpavillonelement 40 der den Erweiterungsbereich bedeckende Boden entfernt ist.

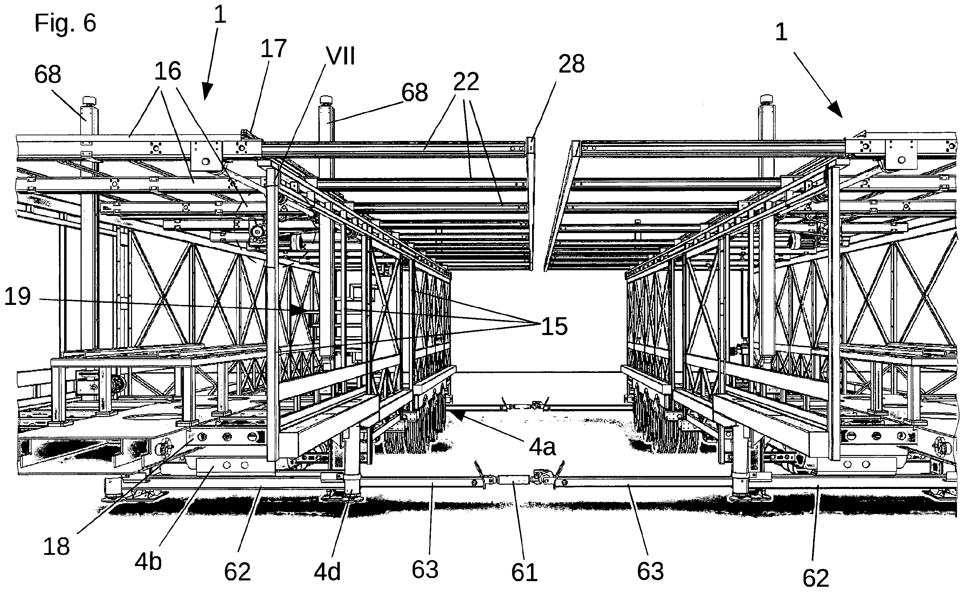

Figur 6 zeigt die Trägerstrukturen 1 zweier zu einem Veranstaltungspavillon gemäß Figur 4 zusammengestellter Pavillonelemente "nackt" und ohne aufgesetzte Dach- bzw. Erweiterungszelle. Zwar ist die Trägerstruktur 1 des in den Fig. 1-3 gezeigten Pavillonelements 10, welches bei dem in der Figur 4 gezeigten Veranstaltungspavillon 20 eingesetzt ist, wandverkleidet. Bei der Darstellung in Fig. 6 ist die Wandverkleidung jedoch weggelassen worden. Es sei angemerkt, dass es auch denkbar wäre, Pavillonelemente tatsächlich "nackt", also ohne Wandverkleidung der Trägerstruktur 1 einzusetzen. Es wäre sogar denkbar, die Dach- und die Erweiterungszelle ganz wegzulassen, wie in Fig. 6 gezeigt und lediglich einen Geschoßboden oberhalb der mit 16, 17 bezeichneten Deckenträger und oberhalb der aus Auszugsstangen 22 und einem daran außenseitig befestigten Querträger 28 gebildeten Bodenträgerstruktur 22, 28 einen Erweiterungsboden vorzusehen. Andererseits wäre es bei dem in Fig. 4 gezeigten Veranstaltungspavillon 20 auch denkbar, den Raum unterhalb der beiden ausgezogenen Erweiterungszellen als zusätzlichen Veranstaltungsraum zu nutzen, beispielsweise als überdachten Raucherbereich oder dergleichen und dafür eine beispielsweise als aufrollbare Folie an den Erweiterungszellen befestigte Seitenwand vorzusehen,welche sich entlang der sich in Erweiterungsrichtung erstreckenden Seitenkanten des Veranstaltungspavillons 20 unterhalb der beiden Erweiterungszellen erstrecken könnte.

Angemerkt sei ferner, dass die in Fig. 1 gezeigten Trägerstrukturen 1 der beiden Pavillonelemente im raumreduzierten Transportzustand jeweils in dem Transportvolumen untergebracht sind, wozu die aus den horizontal verfahrbaren Ausschubstangen 22 und dem Querträger 28 gebildete Bodenträgerstruktur 22, 28 für den Erweiterungsboden entgegen der Erweiterungsrichtung E in das Transportvolumen hinein verfahren werden. Die Trägerstrukturen 1 ruhen dabei jeweils auf ihren Auflagestrukturen 4 (Fig. 1-3), welche neben einem Fahrwerk 4a und einer Aufliegerkupplung 4b eine bodenseitige Stützstruktur 18 aufweist, die aus Quer- und Längsträgern besteht und ein sich entlang der Seitenkanten des Transportvolumens erstreckendes, abschnittsweise fachwerkartig verstrebtes Stützträgergerüst 15 trägt, auf dem oberseitig Deckenquer- und längsträger 16, 17 abgestützt sind. An der linken Trägerstruktur 1 erkennt man dabei im Hintergrund einen Treppenaufgang 19, der auf die Ebene der Veranstaltungsfläche oberhalb der Deckenträger 16, 17 und der Ausschubstangen 22 führt. Die Auflagestruktur weist dabei neben dem Fahrwerk 4a und der Auflegerkupplung 4b noch vertikal ausfahrbare Bodenstützen 4d auf, die sich von der Bodenstruktur 18 ausgehend nach unten erstrecken und beim Aufbau des Veranstaltungspavillons zur besseren Verankerung bzw. Abstützung der Pavillonelemente am Untergrund ausgefahren werden können. Weiterhin sind an den Bodenstützen 4d unterhalb der Bodenstruktur 18 quer verlaufende Schienen 62 befestigt, in denen jeweils eine ausschiebbare Zugstange 63 aufgenommen ist, die in einer ausgeschobenen Stellung arretiert werden kann. Die beiden Zugstangen 63 am vorderen und am hinteren Ende des Pavillonelements sind dabei jeweils entsprechenden Zugstangen 63 am anderen Pavillonelement zugewandt, wobei die einander jeweils zugewandten Zugstangen 63 über eine zwischengeordnete Kupplungsvorrichtung 61 miteinander verbunden sind. Die Kupplungsvorrichtung 61 kann dabei beispielsweise einen Spanngurt umfassen, so dass die beiden Pavillonelemente über die Kupplung 61 und die einander zugewandten Zugstangen 63 aneinander in Querrichtung bzw. in Erweiterungsrichtung zueinander hin vorgespannt und dadurch gesichert werden können.

Figur 7 zeigt das Detail VII in Fig. 6, jedoch mit aufgelegten Bodenplatten 32, 33 des Erweiterungsbodens 32, 33 bzw. einer Bodenplatte 34 des Geschoßbodens 34, wobei der Antrieb und die Linearführung für die Bodenträgerstruktur 22, 28 des Erweiterungsbodens 32, 33 deutlich zu erkennen ist.

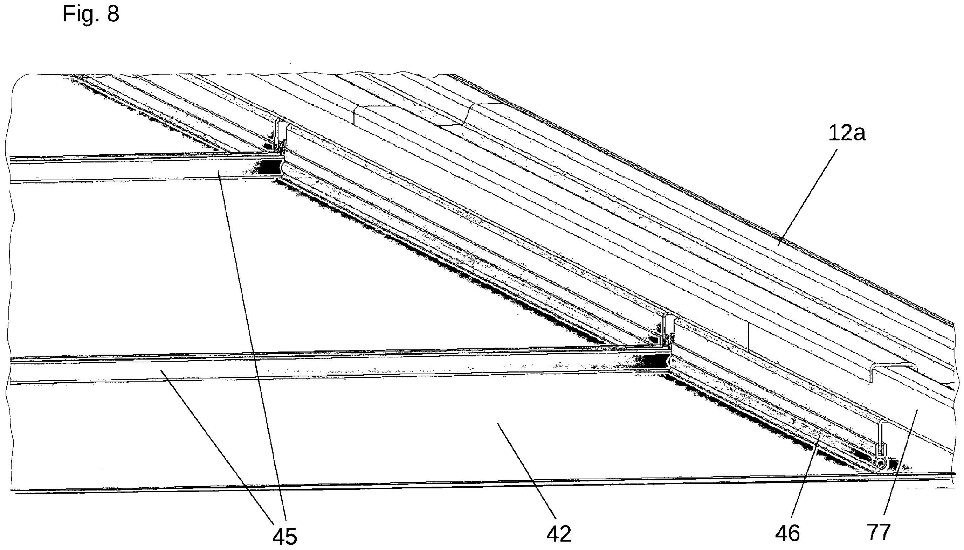

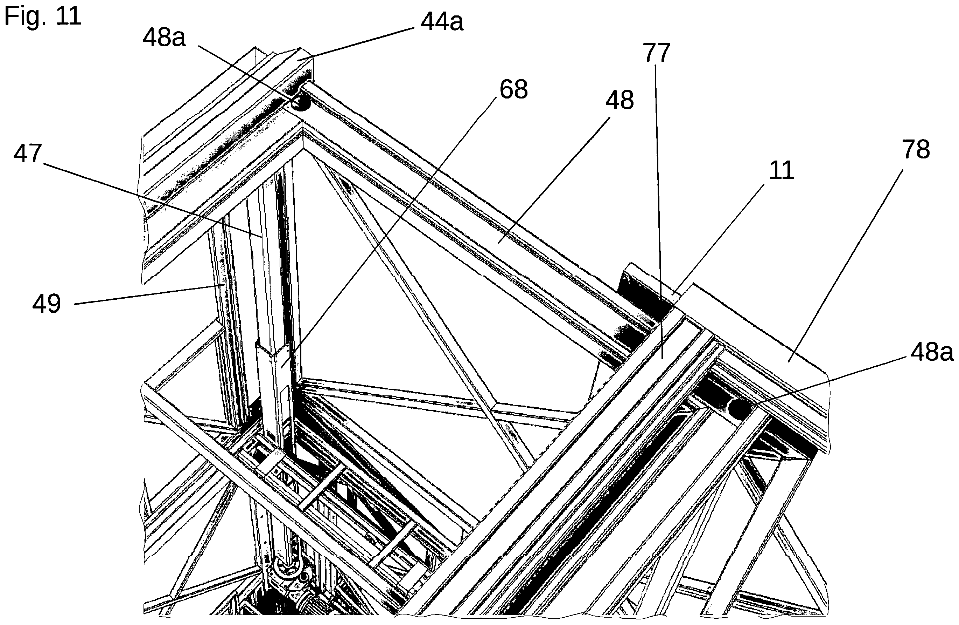

Dafür ist ein an einem der Deckenquerträger 16 befestigter Elektromotor 24 vorgesehen, dessen Ausgangswelle mit einem Zahnrad versehen ist, welche über einen Zahnriemen 25 eine mit einem weiteren Zahnrad versehene Antriebswelle 23 antreibt, die sich quer zur Erweiterungsrichtung E längs der Trägerstruktur 1 unterhalb der Bodenebene des Geschoßbodens 34 an den Querträgern 16 gelagert durch die gesamte Trägerstruktur 1 erstreckt. Die Ausschubstangen 22 sind dabei als Zahnstangen mit einer unterseitigen Verzahnung ausgebildet und in Linearführungsschienen 21 geführt aufgenommen, welche wiederum an den Deckenquerträgern 16 befestigt sind. Man erkennt aus den Figuren 6 und 7, dass sich der Erweiterungsboden 32, 33, aber auch der Geschoßboden 34 in etwa auf Höhe der Oberseite des Transportvolumens ausbreitet, wenn keine Dachzelle/Erweiterungszelle auf die Trägerstruktur 1 aufgesetzt ist. Der Erweiterungsboden 32, 33 bzw. der Geschoßboden 34 erstrecken sich aber auch in etwa auf Höhe der Oberseite des Transportvolumens, also nur wenig unterhalb der oberen Außenoberfläche des zum raumreduzierten Transportzustand zusammengefügten Transportcontainers, wenn die Dachzelle bzw. die Erweiterungszelle mit dünnen Dächern ausgestattet sind, die ohne großen vertikalen Abstand aufeinander liegen, wie insbesondere aus Fig. 8 und 11 hervorgeht.

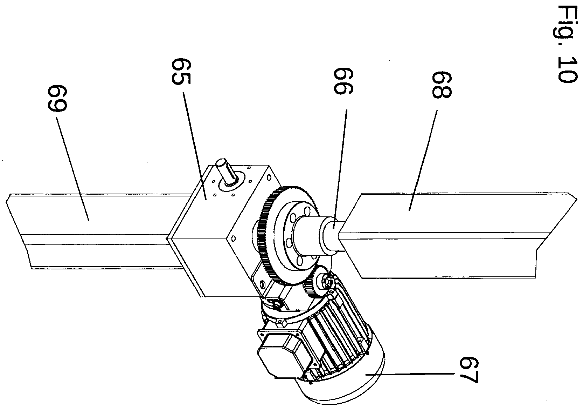

Die Anordnung eines als dünne Platte beispielsweise aus Aluminium oder dergleichen ausgebildeten Basisdachs 42 der Dachzelle 2 gegenüber dem Erweiterungsdach 12 der Erweiterungszelle ist dabei der Fig. 8 im Einzelnen zu entnehmen. Die das Basisdach 42 tragende Trägerstruktur ist dagegen in Fig. 11 zu erkennen und weist einen viereckigen Trägerrahmen 44a, 48 auf, der über fachwerkartig verstrebte Stützträger 49, welche die Seitenwände der Basiszelle 2 tragen, an den Seitenkanten des Transportvolumens nach unten hin verlängert ist. Der Dachträgerrahmen 44a, 48 für das Basisdach 42 ruht dabei auf in Vertikalrichtung verfahrbaren Ausschubstangen 47, die in Linearführungsschienen 68 aufgenommen sind und unterseitig von einer in Fig. 10 dargestellten Gewindespindel 66 höhenverstellt werden können. Die Gewindespindeln 66 werden dabei jeweils von einem eigenen Elektromotor 67 angetrieben, welcher über einen Getriebeblock 65 auf die jeweilige Gewindespindel 66 wirkt, wobei die gesamte, den in Vertikalrichtung ausziehbaren Pfeiler der Dachzelle bildende Konstruktion über einen unterseitigen Pfeilerabschnitt 69 auf dem Boden der Trägerstruktur 1, also letztlich der Auflagestruktur 4 abgestützt ist.

Wie wiederum die Fig. 8 zeigt, ist auf dem Querträger 77 des Erweiterungsdachträgerrahmens 77, 78 ein eine Regenrinne entlang des Querträgers 77 formendes Flächenelement 12a mit seinem abgekanteten Abschnitt eingehängt, welches wie der Rest der daran anschließenden Dachfläche als dünnes Blech ausgebildet ist. Der Querträger 77 ist über Längsträger 78 mit einem weiteren Querträger auf der in Erweiterungsrichtung E gelegenen Seite verbunden. An dem Querträger 77 sind ferner unterseitige Dichtlippen 46 angebracht, die das Basisdach 42 abstreifen und den Raum zwischen dem Querträger 77 und dem Basisdach 42 abdichten. Zum Verfahren des Erweiterungsdachs 12 bzw. der gesamten Erweiterungszelle 3 auf dem Basisdach 42 in Horizontalrichtung ist das Erweiterungsdach 12 in auf dem Basisdach 42 aufliegenden Linearführungsschienen 45 aufgenommen.

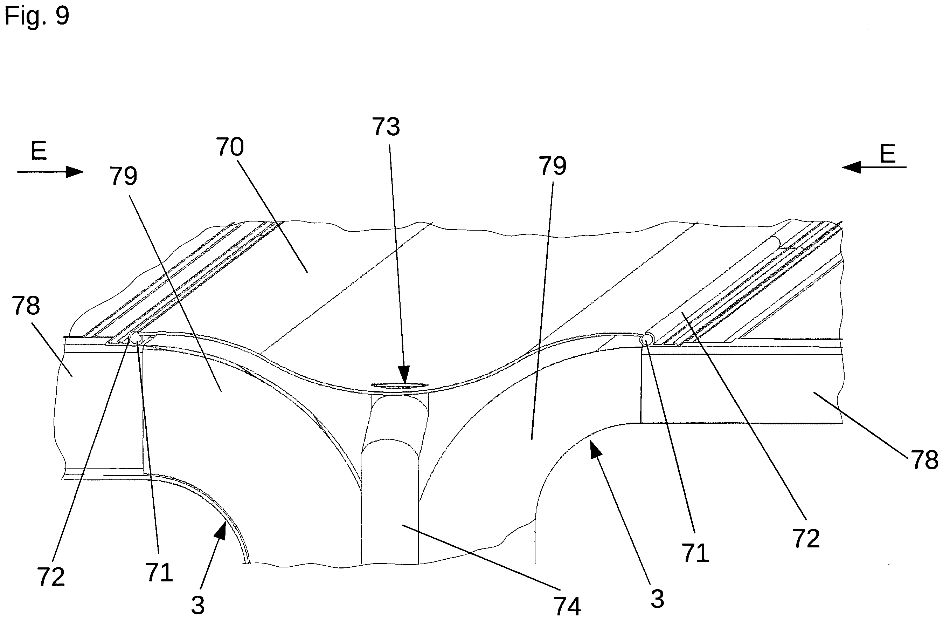

Die Figur 9 zeigt im Detail den Bereich der Stoßfuge der beiden beim Veranstaltungspavillon 20 (Fig. 4) aufeinander treffenden Erweiterungszellen 3 im Dachbereich. Dabei erkennt man am jeweils in Erweiterungsrichtung E gelegenen Übergangsbereich vom horizontalen Dach 12 in die vertikale Seitenwand 13 einen abgerundeten, an den Längsträger 78 des Dachträgerrahmens 77, 78 anschließenden Trägerabschnitt 79. Am Außenende des Dachlängsträgers 78 ist dabei jeweils ein sich quer zur Erweiterungsrichtung E über das Erweiterungsdach erstreckendes Kedernutelement 72 bzw. eine Kedernutschiene 72 aufgebracht, in die eine die Stoßfuge abdichtende Plane 70 mit ihren beiden Kedern 71 eingehängt ist. Die Plane 70 ist dabei so breit, dass sie im eingehängten Zustand in der Mitte zwischen den beiden Erweiterungszellen 3 etwas durchhängt und dadurch eine Regenrinne bildet, die an zumindest einer Seitenkante über eine Durchtrittsöffnung 73 mit einem Fallrohr 74 verbunden ist.

Auf der der Erweiterungsrichtung E abgewandten Seite der Dachzelle 2 sind die beiden Basisdachlängsträger 48 über einen Basisdachträger 44a miteinander verbunden, siehe insbesondere Fig. 3 und 11, welcher nach oben über die Dachebene des Basisdachs 12 soweit übersteht, dass er im horizontal eingefahrenen Zustand der Erweiterungszelle mit dem Erweiterungsdach 12 eine horizontal bündige Außenoberfläche bildet, die über einen abgerundeten Übergangsabschnitt in die vertikale Seitenwand 44 auf der der Erweiterungsrichtung E abgewandten Seite der Basiszelle 2 übergeht. Man erkennt dabei ferner in der Fig. 11 Durchtrittsöffnungen 48a im Basisdachträgerrahmen 44a, 48, die dem Regenrinnenelement 12a des Erweiterungsdachs 12 einerseits und einem entsprechenden Regenrinnenelement am Basisdach 42 andererseits zugeordnet sind und durch die das Regenwasser nach unten entweder durch rahmenintegrierte oder extern anzubringende Fallrohre abgeführt werden kann.

Wie man aus der Zusammenschau der Figuren 6, 8 und 11 erkennt, liegt die Bodenebene des Erweiterungsbodens 32, 33 bzw. des Geschoßbodens 34 dabei um die Höhe der Basisdachträger 48 zuzüglich der Höhe der Erweiterungsdachträger 77 und deren vertikalen Abstand und der Dicke der Dachfolien sowie einem gewissen Sicherheitsabstand unterhalb der Außenoberfläche des zu seinem raumreduzierten Transportzustand zusammengefügten, transportablen Containers.

Im Rahmen der Erfindung bedeutet daher "in etwa auf Höhe der Oberseite des Transportvolumens" in einem Bereich, der auch einen solchen Abstand von der Außenoberfläche des Transportcontainers umfasst, beispielsweise bis zu 50 cm unterhalb der Außenoberfläche des transportablen Containers. Um auf der Straße transportabel zu sein, kann der Container und damit das Transportvolumen ferner keine Breite aufweisen, die größer als 2,50 m ist, so dass der transportable Container in seinem zusammengefügten, in Figur 1 gezeigten Zustand in aller Regel nicht breiter sein wird. Auch die Höhe des zum Transportzustand zusammengefügten, transportablen Containers unterliegt gewissen praktischen Beschränkungen und wird daher in aller Regel 4 m nicht überschreiten . Die vertikale Verfahrhöhe und damit die Höhe des von der Erweiterungszelle bzw. der Dachzelle umschlossenen Veranstaltungsraums muss übermannshoch sein, also in aller Regel 2 m oder größer. Vorzugsweise ist der Abstand des Erweiterungsbodens von der Auflagefläche auf der der Veranstaltungspavillon aufgebaut ist, ebenfalls übermannshoch.

Abwandlungen und Modifikationen der gezeigten Ausführungsformen sind möglich, ohne den Rahmen der Erfindung zu verlassen.

So wäre es beispielsweise denkbar, bei Verwendung der in Fig. 6 gezeigten, nackten Trägerstrukturen 1 mit integrierter Erweiterungsbodenträgerstruktur 22, 28 (wofür man sich selbstverständlich die Ausfahrpfeiler für die in aller Regel verwendete, vertikal ausfahrbare Dachzelle wegdenken müsste) den Geschoßboden als auf den Deckenträgern 16 aufliegendes Plattenelement auszubilden und den Erweiterungsboden als an den Deckenlängsträger 17 angelenktes Klappenelement, das im Transportzustand auf dem Geschoßboden aufliegt und im Veranstaltungszustand auf der Erweiterungsbodenträgerstruktur 22, 28. Allerdings besteht dann das Problem, wie man den Boden auf- bzw. zusammenklappt. Ordnet man die beiden Böden als übereinander liegende, in Horizontalrichtung verschiebbare Lagen an, so hat man das Problem eines Absatzes im Bereich ihrer Stoßfuge.

Bei der bevorzugten Ausführungsform mit Dachzelle 2 und Erweiterungszelle 3 ist der Erweiterungsboden 32, 33 (Figur 7) daher als nach oben wegklappbarer Klappboden mit zwei Klappbodenelementen 32, 33 ausgebildet, der im horizontal eingefahrenen Zustand der Erweiterungszelle 3 und im Transportzustand mit seinen beiden Klappbodenelementen 32, 33 vertikal aneinander liegend ausgerichtet ist und beim Aus- und Einfahren der Erweiterungsbodenträgerstruktur 22, 28 aus- und zusammengeklappt wird. Dazu sind die Bodenplatten 32, 33 aneinander angelenkt. Ferner ist eine Riegeleinrichtung vorgesehen, mit welcher die äußere Bodenplatte 33 an ihrem in Erweiterungsrichtung gelegenen Ende an der Erweiterungszelle 3 angeriegelt und dieser gelöst werden kann. Beim Ausschieben der Bodenträgerstruktur 22, 28 drückt somit die Bodenträgerstruktur 22, 28 auf die in Erweiterungsrichtung E gelegene Seitenwand 13 der Erweiterungszelle und schiebt diese aus, wodurch der Klappboden 32, 33 ausgeklappt wird.

Beim Einfahren der Bodenträgerstruktur 22, 28, welche mit der Erweiterungszelle 3 oder dem äußeren Plattenelement 33 dafür verbindbar ist, nimmt die Erweiterungsbodenstruktur 22, 28 die Erweiterungszelle 3 mit und faltet den Klappboden 32, 33 zusammen, bis er seine vertikale Stellung erreicht, in der er zusammen mit der Dachzelle 2 und der Erweiterungszelle 3 vertikal verfahrbar ist.

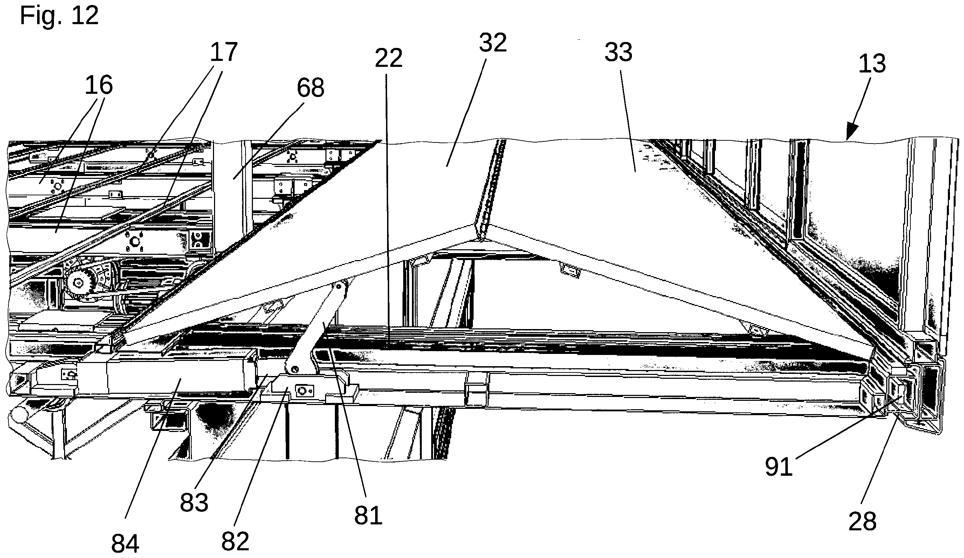

Die Figur 12 zeigt eine weitere vorteilhafte Fortbildung, die eine hydraulisch betätigte Aufrichthilfe für den Erweiterungsboden 32, 33 betrifft. An einer der Auszugstangen 22 ist dabei eine Gelenkkonsole 82 befestigt, an der ein schwenkbarer Hebelarm 81 angelenkt ist, welcher wiederum über einen Hydraulikzylinder 84 und einer mittels des Hydraulikzylinders 84 betätigten Schubstange 83 aufgerichtet werden kann. Der Hebelarm 81 greift mit seinem der Gelenkkonsole abgewandten Ende an der entgegen der Erweiterungsrichtung oder innenliegenden Bodenplatte 32 an. Soll die Bodenträgerstruktur 22, 28 aus ihrem horizontal ausgefahrenen Zustand eingefahren und der Erweiterungsboden 32, 33 entsprechend zusammengeklappt werden, wird der Hydraulikzylinder 84 betätigt, so dass der Hebelarm 81 an der innenliegenden Bodenplatte 32 angreift und damit die Einfahrbewegung der Bodenträgerstruktur 22, 28 und damit auch das Aufklappen des Erweiterungsbodens 32, 33 unterstützt.

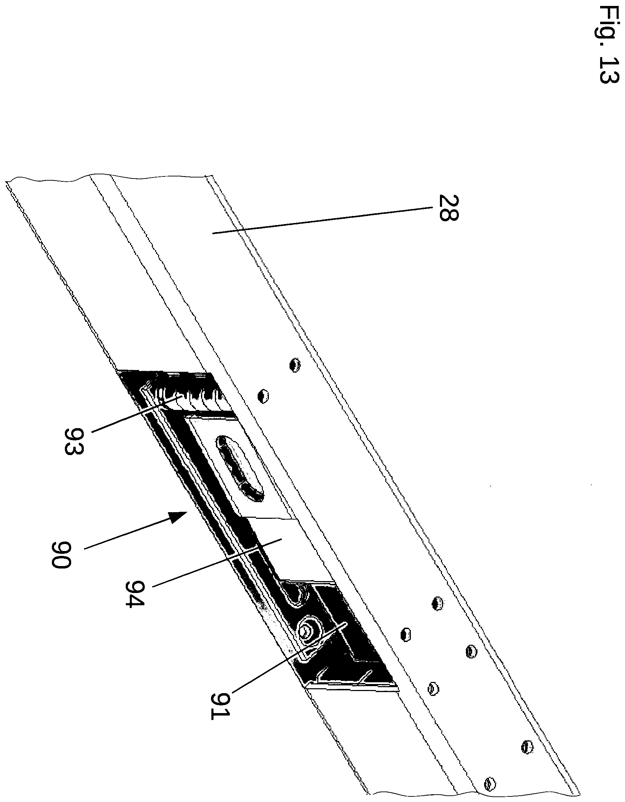

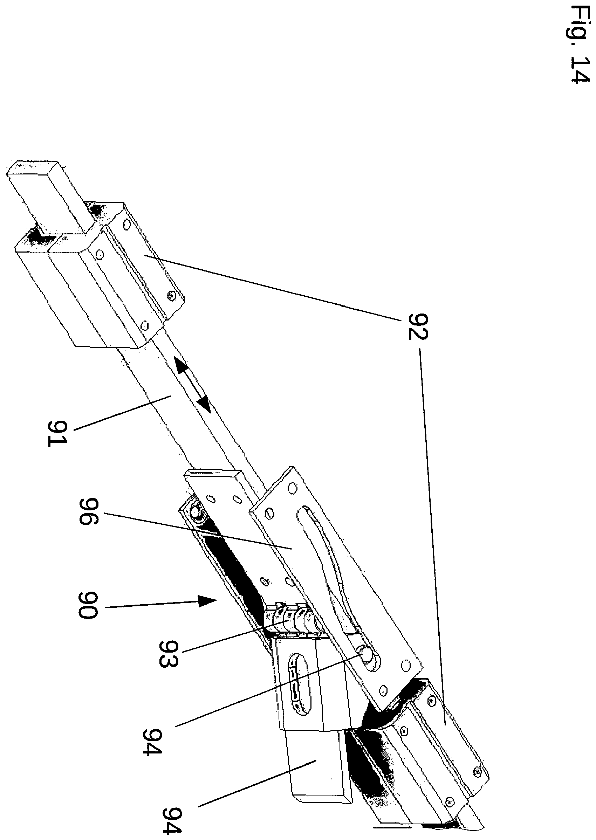

Die Figuren 13 und 14 zeigt eine weitere vorteilhafte Fortbildung, die eine Verriegelungseinrichtung 90 betreffen, mit der die Bodenträgerstruktur 22, 28 zum horizontalen Aus- und Einfahren und zum Befestigen während des Veranstaltungszustands an der in Erweiterungsrichtung E gelegenen Seitenwand 13 der Erweiterungszelle 3 anriegelbar und zum vertikalen Aus- und Einfahren und während des Transportzustands von der Seitenwand 13 der Erweiterungszelle 3 lösbar ist. Die Verriegelungseinrichtung 90 weist dabei eine in dem an den Auszugsstangen 22 außenseitig befestigten, als Hohlprofil ausgebildeten Querträger 28 (siehe Fig. 6 und 12) aufgenommene Schubstange 91 auf, die dort über zwei Lagerblöcke 92 (siehe Fig. 14) verschiebbar (siehe Doppelpfeil in Fig. 14) abgestützt ist. An der Schubstange 91 ist ein Gelenk 93 mit seinem einen Gelenkflügel befestigt. Der andere Gelenkflügel 94 ist als ausstellbarer Riegel ausgebildet und weist an seiner Ober- und Unterseite einen Führungszapfen 94 auf, welcher jeweils in einer Führungsnut geführt ist, die in einer an dem Querträger 28 befestigten Führungsplatte 96 eingeformt ist. Wird die Schubstange 91 mittels eines nicht gezeigten Hydraulikzylinders betätigt, so wird einerseits das Gelenk 93 mitsamt der Schubstange 91 verschoben und andererseits der Riegel 94 ausgestellt oder eingefahren. Wird die Schubstange 91 aus der in Fig. 13 gezeigten Stellung in die in Fig. 14 gezeigte Stellung verfahren, so gleitet die Führungszapfen 94 entlang der Führungsbahnen in den Führungsplatten 96, wodurch der Riegel 94 aus seiner in Fig. 13 gezeigten, eingefahrenen Stellung in die in Fig. 14 gezeigte, ausgestellte Stellung unde gleichzeitig in Hintergriff an einem zugeordneten Halteelement an der Seitenwand 13 der Erweiterungszelle 3 gelangt.

## Patentansprüche

1. Pavillonelement (10) zum Aufbau eines Veranstaltungspavillons (20; 30), das in seinem raumreduzierten Transportzustand zu einem transportablen Container mit einem bevorzugt in etwa quaderförmigen Transportvolumen auf einer in etwa rechteckigen Grundfläche zusammengefügt ist, und das in seinem flächig ausgebreiteten Veranstaltungszustand zumindest einen in einer Erweiterungsrichtung (E) seitlich neben der Grundfläche gelegenen Teil einer Veranstaltungsfläche des Veranstaltungspavillons (20; 30) bereitstellt, mit
einer starren und als Ganzes in dem Transportvolumen untergebrachten Trägerstruktur (1), und mit
zumindest einem an dem Container zum Auf- und Abbau des Veranstaltungspavillons (20; 30) aus dem Transportvolumen heraus und in das Transportvolumen hinein beweglich gelagerten, an einer in der Erweiterungsrichtung (E) gelegenen Erweiterungsseite neben der Grundfläche ausbreitbaren und in dem Transportvolumen unterbringbaren Erweiterungsboden (32, 33), wobei
der Erweiterungsboden (32, 33) so an dem Pavillonelement (10) angebracht ist, dass er sich im Veranstaltungszustand in etwa auf Höhe der Oberseite des Transportvolumens ausbreitet, und wobei die Erweiterungsseite vorzugsweise eine lange Seite der Grundfläche ist,
**dadurch gekennzeichnet, dass**
der Erweiterungsboden insgesamt oder zumindest mit seiner Bodenträgerstruktur (22, 28) in Horizontalrichtung verfahrbar an der Trägerstruktur (1) aufgenommen, nämlich an der Oberseite der starren Trägerstruktur (1) gelagert ist.

2. Pavillonelement (10) nach Anspruch 1, **dadurch gekennzeichnet, dass** es einen sich im Transportzustand im Transportvolumen untergebrachten, sich im Veranstaltungszustand in etwa auf Höhe des Erweiterungsbodens (32, 33) im Bereich senkrecht oberhalb der Grundfläche erstreckenden Geschoßboden (34) aufweist, um die Veranstaltungsfläche um eine Fläche senkrecht oberhalb der Grundfläche zu erweitern, wobei der Geschoßboden (34) bevorzugt aus einer Anzahl einstückiger, auf Deckenträgern (16, 17) der Trägerstruktur (1) aufliegender oder eine Decke der Trägerstruktur formender Plattenelemente (34) ausgebildet ist, und wobei der Geschoßboden (34) bevorzugt eine Ausnehmung aufweist, durch die ein im Transportvolumen befindlicher Treppenaufgang (19) geführt ist.

3. Pavillonelement (10) nach Anspruch 1 oder 2, **dadurch gekennzeichnet, dass** die Trägerstruktur (1) eine im Transportzustand das Transportvolumen begrenzende Außenhülle (11, 12, 13, 44) trägt, insbesondere eine im Transportzustand allseitig geschlossene Außenhülle (11, 12, 13, 44), wobei sich die Außenhülle (11, 12, 13, 44) sich aus dem Transportzustand nach oben und dann in Erweiterungsrichtung (E) zur Seite hin in den Veranstaltungszustand austeleskopieren lässt, so dass ein sich im Veranstaltungszustand oberhalb des Geschoßbodens (34) und des Erweiterungsbodens (32, 33) erstreckender Teil des Veranstaltungsraums vollständig überdacht ist, bevorzugt zu einer in etwa L-förmigen, zumindest bis auf Fenster und Personeneinlässe mehrseitig geschlossenen, vollständig überdachten Form der Außenhülle (11, 12, 13, 41, 42, 43, 51, 53, 54), wobei auf der zur Erweiterungsrichtung (E) hin gelegene Seite im ersten Stock bevorzugt entweder keine, eine abnehmbare, eine als aufrollbare Plane ausgebildete oder weiter bevorzugt eine einzelne, gegeneinander verschiebbar aufgenommenen Plattenelemente (13a, 13b, 13d, 13e) aufweisende, zusammenschiebbare Seitenwand (13) vorgesehen ist.

4. Pavillonelement (10) nach einem der vorhergehenden Ansprüche, **dadurch gekennzeichnet, dass** ein an der Trägerstruktur (1) beweglich angebrachtes, im Transportzustand im Transportvolumen untergebrachtes Basisdach (42) vorgesehen ist, welches zum Auf- und Abbau des Veranstaltungspavillons (20; 30) aus dem Transportvolumen heraus bzw. in das Transportvolumen hinein vertikal aus- und einfahrbar auf Trägerstruktur (1) abgestützt ist, um in einem vertikal ausgefahrenen Zustand den sich oberhalb der Grundfläche befindenden Teil der Veranstaltungsfläche zu überdachen.

5. Pavillonelement (10) nach einem der vorhergehenden Ansprüche, **dadurch gekennzeichnet, dass** ein an dem Pavillonelement (10) beweglich angebrachtes, im Transportzustand im Transportvolumen untergebrachtes und zum Aufbau des Veranstaltungspavillons (20; 30) durch Bewegung aus dem Transportvolumen heraus oberhalb des ausgebreiteten Erweiterungsbodens (32, 33) ausbreitbares und durch Bewegung in das Transportvolumen hinein abbaubares Erweiterungsdach (12) vorgesehen sein, um einen sich oberhalb des ausgebreiteten Erweiterungsbodens (32, 33) befindenden Teil der Veranstaltungsfläche zu überdachen, wobei das Erweiterungsdach (12) im ausgebreiteten Zustand bevorzugt an das vertikal ausgefahrene Basisdach (42) anschließt, und wobei das Erweiterungsdach (12) bevorzugt in auf dem Basisdach (42) angebrachten Linearführungen (45) in der Erweiterungsrichtung (E) aus- und einziehbar aufgenommen ist.

6. Pavillonelement (10) nach Anspruch 5, **dadurch gekennzeichnet, dass** das Erweiterungsdach (12) und zumindest zwei sich längs der Erweiterungsrichtung erstreckende Seitenwände (11) oder vertikale Stützstrukturen an diesen Seiten zu einer starren, vorzugsweise mehrseitig geschlossenen Erweiterungszelle (3) verbunden sind, die als Ganzes im Transportzustand im Transportvolumen untergebracht ist und zum Auf- und Abbau des Veranstaltungspavillons (20; 30) aus dem Transportvolumen heraus bzw. in das Transportvolumen hineinbewegbar aufgenommen ist, insbesondere lediglich im vertikal ausgefahrenen Zustand des Basisdachs (42) bzw. der Dachzelle (2) in der Erweiterungsrichtung (E) horizontal aus- und einfahrbar aufgenommen ist, um im Veranstaltungszustand den sich oberhalb des Erweiterungsbodens (32, 33) befindenden Teil der Veranstaltungsfläche mehrseitig zu umgrenzen und vorzugsweise einzuhüllen.

7. Pavillonelement (10) nach Anspruch 5 oder 6, **dadurch gekennzeichnet, dass** das Basisdach (42) und das Erweiterungsdach (12), bevorzugt das Basisdach (42) und zumindest die beiden sich längs der Erweiterungsrichtung (E) erstreckende Seitenwände (41) der Dachzelle (2) einerseits sowie das Erweiterungsdach (12) und zumindest die beiden sich längs der Erweiterungsrichtung (E) erstreckende Seitenwände (11) der Erweiterungszelle (3) andererseits als überlappende Lagen nach Art eines Schiebedachs ausgebildet sind.

8. Pavillonelement (10) nach einem der vorhergehenden Ansprüche, **dadurch gekennzeichnet, dass** die vertikal aus- und einfahrbare Abstützung des Basisdachs (42) bzw. der Dachzelle (2) auf der Trägerstruktur (1) bzw. die vertikale Teleskopierbarkeit der Außenhülle (11, 12, 13, 44) mittels einer Mehrzahl von bevorzugt jeweils durch einen Elektromotor (67) antreibbaren Gewindespindeln (66) erfolgt, über welche vertikale Träger (68) des Basisdachs (42) bzw. der Dachzelle (2) in Vertikalrichtung verfahrbar sind.

9. Pavillonelement (10) nach einem der vorhergehenden Ansprüche, **dadurch gekennzeichnet, dass** an in Erweiterungsrichtung (E) verlaufenden Deckenträgern (16) der Trägerstruktur (1) Linearführungsschienen (21) befestigt sind, die sich unterhalb der Bodenebene des Erweiterungsbodens (32, 33) bzw. des Geschoßbodens (34) erstrecken, in denen Ausschubstangen (22) in Erweiterungsrichtung (E) verschiebbar geführt aufgenommen sind, welche Teil einer Bodenträgerstruktur (22, 28) für den Erweiterungsboden (32, 33) bilden und welche bevorzugt Teil eines Antriebsstrangs zum horizontalen Aus- und Einfahren der Erweiterungszelle (3) bilden.

10. Pavillonelement (10) nach Anspruch 9, **dadurch gekennzeichnet, dass** die Bodenträgerstruktur (22, 28) vorteilhaft an den Außenenden der Ausschubstangen (22) mit der in Erweiterungsrichtung gelegenen Seitenwand (13) der Erweiterungszelle (3) verbindbar oder mit Freiheitsgrad in Vertikalrichtung verbunden sind, wobei bevorzugt eine Verriegelungseinrichtung (90) vorgesehen ist, über welche ein die Außenenden der Ausschubstangen (22) verbindenden Außenträger (28) der Bodenträgerstruktur (22, 28) mit der in Erweiterungsrichtung gelegenen Seitenwand (13) der Erweiterungszelle (3) verbindbar und lösbar ist.

11. Pavillonelement (10) nach einem der vorhergehenden Ansprüche, **dadurch gekennzeichnet, dass** der Erweiterungsboden (32, 33) als Klappboden ausgebildet ist und zwei im Transportzustand vertikal und mit ihren großen Flächen aneinander liegend angeordnete Plattenelemente (32, 33) aufweist, welche beispielsweise gelenkig miteinander verbunden sind, wobei die Plattenelemente (32, 33) im Veranstaltungszustand auf den Ausschubstangen (22) aufliegen und beim Einfahren der Ausschubstangen (22) nach oben wegklappen.

12. Pavillonelement (10) nach Anspruch 11, **dadurch gekennzeichnet, dass** die Plattenelemente (32, 33) des Erweiterungsbodens (32, 33) im zusammengeklappten Zustand miteinander verriegelbar sind oder zumindest eines der Plattenelemente (32, 33) an der Dachzelle (2) arretierbar ist, insbesondere das in Erweiterungsrichtung (E) äußere Plattenelement (33) mit seinem im zusammengeklappten Zustand unteren Ende, wobei bevorzugt die Verriegelungseinrichtung (90) vorgesehen ist, welche in dem die Außenenden der Ausschubstangen (22) verbindenden Außenträger (28) untergebracht ist und wobei das in Erweiterungsrichtung (E) äußere Plattenelement (33) mit seinem im zusammengeklappten Zustand unteren Ende gelenkig mit dem Außenträger (28) verbunden ist.

13. Pavillonelement (10) nach einem der Ansprüche 9 bis 12, **dadurch gekennzeichnet, dass** die Ausschubstangen (22) als Zahnstangen ausgebildet sind, welche über eine gemeinsame, sich quer zur Erweiterungsrichtung (E) horizontal erstreckende Antriebswelle (23) antreibbar sind, wobei die Antriebswelle (23) insbesondere mit einem im Transportvolumen aufgenommenen Elektromotor (24) angetrieben wird.

14. Veranstaltungspavillon (20), welcher aus zumindest zwei Pavillonelementen (10) nach einem der vorhergehenden Ansprüche aufgebaut ist, wobei die beiden Pavillonelemente (10) mit ihren in Erweiterungsrichtung (E) weisenden Seiten parallel nebeneinander und mit einem solchen Abstand angeordnet sind, dass die Erweiterungsböden (32, 33) bzw. die Erweiterungszellen (3) der beiden Pavillonelemente (10) im Veranstaltungszustand aneinander grenzen, so dass eine gemeinsame Veranstaltungsfläche oder ein gemeinsamer Innenraum gebildet wird.

15. Veranstaltungspavillon (30), welcher aus zumindest zwei Pavillonelementen (10) nach einem der vorhergehenden Ansprüche aufgebaut ist, wobei die beiden Pavillonelemente (10) mit ihren in Erweiterungsrichtung (E) weisenden Seiten parallel nebeneinander angeordnet sind, wobei den beiden Pavillonelementen (10) ein Zentralpavillonelement (40) zwischengeordnet ist, welches auf Höhe der Bodenebene der beiden Pavillonelemente (10) einen auf einer Trägerstruktur lagernden Geschoßboden aufweist, und/oder eine vertikal gegenüber der Trägerstruktur aus- und einfahrbare Dachzelle mit zwei offenen Seiten, wobei die beiden Pavillonelemente (10) mit ihren in Erweiterungsrichtung (E) weisenden Seiten mit einem solchen Abstand angeordnet sind, dass die Erweiterungsböden (32, 33) bzw. die Erweiterungszellen (3) der beiden Pavillonelemente (10) im Veranstaltungszustand an den Geschoßboden bzw. die offenen Seiten der ausgefahrenen Dachzelle des Zentralpavillonelements (40) grenzen, so dass eine gemeinsame Veranstaltungsfläche oder ein gemeinsamer Innenraum gebildet wird.

## Claims

1. A pavilion element (10) for the assembly of an event pavilion (20; 30), which in its space-reduced transport condition is joined together to form a transportable container preferably having an approximately square shaped transport volume on an approximately rectangular base surface, and which in its spread-out event condition provides at least one part of an event space of the event pavilion (20; 30) located in an extension direction (E) beside the base surface, having
a rigid carrier structure (1) which is accommodated as an entity in the transport volume, and comprising
at least one extension floor (32, 33) movably mounted on the container for assembly and disassembly of the event pavilion (20; 30) out of the transport volume and into the transport volume, which extension floor (32, 33) is spreadable out on an extension side located in the extension direction (E) beside the base surface and accommodatable in the transport volume, with
the extension floor (32, 33) being attached to the pavilion element (10) in such a manner that in event condition it spreads at about the height of the upper side of the transport volume, and with the extension side preferably being a long side of the base surface,
**characterized in that**
the extension floor as a whole or at least with its floor carrier structure (22, 28) is movably received on the carrier structure (1) in the horizontal direction, ie on the upper side of the rigid carrier structure (1).

2. A pavilion element (10) in accordance with claim 1, **characterized in that** it comprises a storey floor (34) accommodated in the transport volume in transport condition, and extending in the event condition to about the height of the extension floor (32, 33) in a region perpendicular above the base surface, in order to extend the event space by a space perpendicular above the base surface, with the storey floor (34) preferably being designed of a number of integral plate elements (34) lying on roof carriers (16, 17) of the carrier structure (1) or forming a roof of the carrier structure, and with the storey floor (34) preferably exhibiting a recess through which a staircase (19) leads which is located in the transport volume.

3. A pavilion element (10) in accordance with claim 1 or 2, **characterized in that** the carrier structure (1) carries an outer case (11, 12, 13, 44) limiting the transport volume in transport condition, in particular an outer case (11, 12, 13, 44) which is closed on all sides in transport condition, whereby the outer case (11, 12, 13, 44) can be telescoped out from transport condition upwards and then in the extension direction (E) sideways into event condition, so that in event condition part of the event space extending above the storey floor (34) and the extension floor (32, 33) is entirely covered, preferably to an approximately L-shaped fully roofed form of the outer case (11, 12, 13, 41, 42, 43, 51, 53, 54) which is closed on several sides except for windows and person entrances, whereby on the side located towards the extension direction (E) on the first floor provision is preferably made for either no lateral wall (13), which can be pushed together, a detachable wall or a wall designed as a plane, that can be reeled up, or further preferably a single lateral wall (13) comprising plate elements (13a, 13b, 13c, 13d, 13e) which are mutually shiftable.

4. A pavilion element (10) in accordance with any of the preceding claims, **characterized in that** provision is made for a base roof (42) movably attached on the carrier structure (1), accommodated in the transport volume in transport condition which for the assembly and disassembly of the event pavilion (20; 30) out of the transport volume and/or into the transport volume is supported on carrier structure (1) and vertically extendable or retractable, so that the part of the event space above the base surface can be covered in vertically extended condition.

5. A pavilion element (10) in accordance with any of the preceding claims, **characterized in that** provision is made for an extension roof (12) which is movably attached on the pavilion element (10), accommodated in the transport volume in transport condition, which for assembly of the event pavilion (20; 30) is extendable above the spread out extension floor (32, 33) by moving out of the transport volume and which can be disassembled by moving into the transport volume, so that part of the event space above the spread out extension floor (32, 33) can be roofed, with the extension roof (12) in spread out condition preferably adjoining the vertically extended base roof (42) and with the extension roof (12) being preferably received in linear guides (45) mounted on the base roof (42) and being extendable and retractable in the direction of extension (E).

6. A pavilion element (10) in accordance with claim 5, **characterized in that** the extension roof (12) and at least two lateral walls (11) extending along the extension direction or vertical support structures at those sides are connected with each other to form a rigid, preferably multi-side closed extension cell (3) on, which is accommodated in the transport volume in transport condition as an entity and which for assembly and disassembly of the event pavilion (20; 30) is movably received to be moved out of the transport volume and/or into the transport volume, in particular only in the vertically extended state of the base roof (42) and/or the roof cell (2) is movably received to be moved out and into the horizontal extension direction (E) in order to limit and preferably shroud the part of the event space above the extension floor (32, 33) on multi sides in event condition.

7. A pavilion element (10) in accordance with claim 5 or 6, **characterized in that** the base roof (42) and the extension roof (12), preferably the base roof (42) and at least the two lateral walls (41) of the roof cell (2) on one side extending along the extension direction (E) as well as the extension roof (12) and at least the two lateral walls of the extension cell (3) extending along the extension direction (E) on the other side are designed as overlapping layers in a manner similar to a sliding roof.

8. A pavilion element (10) in accordance with any of the preceding claims, **characterized in that** the vertically extendable and retractable support of the base roof (42) and/or the roof cell (2) on the carrier structure (1) and/or the vertical telescopability of the outer case (11, 12, 13, 44) is effected by a multitude of threaded spindles (66) preferably drivable by an electric motor (67) by which vertical carriers (68) of the base roof (42) and/or the roof cell (2) are movable in the vertical direction.

9. A pavilion element (10) in accordance with any of the preceding claims, **characterized in that** linear guide rails (21) are attached on ceiling carriers (16) of the carrier structure (1) extending in the extension direction (E), such linear guide rails (21) extending below the bottom plane of the extension floor (32, 33) and/or the storey floor (34), in which push out rods (22) are received and movably guided in the extension direction (E) forming a part of a floor carrier structure (22, 28) for the extension floor (32, 33) and which preferably form part of a drive train for the horizontal extension and retraction of the extension cell (3).

10. A pavilion element (10) in accordance with claim 9, **characterized in that** the floor carrier structure (22, 28) is preferably connectable at the outer ends of the push out rods (22) with the lateral wall (13) of the extension cell (3) in the extension direction or is connectable with a degree of freedom in vertical direction, with a locking device (90) preferably being provided by which an external carrier (28) of the floor carrier structure (22, 28) connecting the external ends of the push out rods (22) is connectable with and removable from the lateral wall (13) of the extension cell (3) located in the extension direction.

11. A pavilion element (10) in accordance with any of the preceding claims, **characterized in that** the extension floor (32, 33) is designed as a foldable floor and comprises two plate elements (32, 33) which in transport condition are vertical and whose large surfaces lie adjacent to one another, which, for example, are articulated to one another, with the plate elements (32, 33) in event condition lying on the push out rods (22) and fold up when the push out rods (22) are retracted.

12. A pavilion element (10) in accordance with claim 11, **characterized in that** the plate elements (32, 33) of the extension floor (32, 33) are interlockable in folded condition or that at least one of the plate elements (32, 33) is lockable at the roof cell (2), in particular the outer plate element (33) in extension direction (E) with its bottom end in folded up condition, with provision preferably being made for the locking device (90) which is accommodated in the external carrier (28) connecting the external ends of the push out rods (22) and with the external plate element (33) in extension direction (E) being articulated with its bottom end in folded up condition with the external carrier (28).

13. A pavilion element (10) in accordance with any of the claims 9 to 12, **characterized in that** push out rods (22) are designed as toothed racks, which are drivable via a common drive shaft (23) horizontally extending transversely to the extension direction (E), with the drive shaft (23) being driven by an electric motor (4) received in the transport volume.

14. A pavilion element (20) which is composed of at least two pavilion elements (10) in accordance with any of the preceding claims, with the two pavilion elements (10), with their sides pointing in the extension direction (E), being arranged parallel to each other and with such a distance that the extension floors (32, 33) and/or the extension cells (3) of the two pavilion elements (10) abut in event condition, so that a common event space or a common interior is formed.

15. A pavilion element (30) which is composed of at least two pavilion elements (10) in accordance with any of the preceding claims, with the two pavilion elements (10), with their sides pointing in the extension direction (E), being arranged parallel to each other, with a central pavilion (40) being interposed between both pavilion elements (10) which on the height of the floor level of the two pavilion elements (10) comprises a storey floor supported on a carrier structure, and/or a roof cell with two open sides which is vertically extendable and retractable relative to the carrier structure, with the two pavilion elements (10), with their sides pointing in the extension direction (E), being arranged with such a distance that the extension floors (32, 33) and/or the extension cells (3) of the two pavilion elements (10) abut the storey floor in event condition and/or the open sides of the extended roof cell of the central pavilion element (40), so that a common event space or a common interior is formed.

## Revendications

1. Elément de pavillon (10) pour la construction d'un pavillon pour manifestations (20; 30), qui, dans son état de transport à encombrement réduit, est assemblé pour former un conteneur transportable présentant un volume de transport de préférence à peu près parallélépipédique sur une surface de base à peu près rectangulaire, et qui, dans son état déployé en nappe pour une manifestation, offre au moins une partie d'une surface pour manifestations dudit pavillon pour manifestations (20; 30), qui est située, dans une direction d'extension (E), latéralement à côté de la surface de base, comprenant:
une structure de support (1) rigide et logée comme un tout à l'intérieur du volume de transport, et
au moins un plancher d'extension (32, 33) qui, pour le montage et le démontage du pavillon pour manifestations (20; 30), est logé sur le conteneur de manière à pouvoir être déplacé hors du volume de transport et à être déplacé dans le volume de transport, est déployable sur un côté d'extension situé dans la direction d'extension (E), à côté de la surface de base, et peut être logé dans le volume de transport, dans lequel
ledit plancher d'extension (32, 33) est monté sur l'élément de pavillon (10) de telle manière que, à l'état de manifestation, il se déploie à peu près au niveau de la face supérieure du volume de transport, et dans lequel le côté d'extension est de préférence un long côté de la surface de base,
**caractérisé par le fait que**
le plancher d'extension est, dans son ensemble ou au moins par sa structure de support de plancher (22, 28), reçu sur la structure de support (1) de manière à pouvoir être déplacé dans la direction horizontale, à savoir logé sur la face supérieure de la structure de support (1) rigide.

2. Elément de pavillon (10) selon la revendication 1, **caractérisé par le fait qu'**il présente un plancher d'étage (34) afin d'étendre la surface pour manifestations d'une surface verticalement au-dessus de la surface de base, plancher d'étage (34) qui, à l'état de transport, est logé dans le volume de transport et qui, à l'état de manifestation, s'étend à peu près au niveau du plancher d'extension (32, 33) dans la zone située verticalement au-dessus de la surface de base, dans lequel le plancher d'étage (34) est réalisé de préférence à partir d'un nombre d'éléments de plaque (34) en une seule pièce qui reposent sur des poutres de plafond (16, 17) de la structure de support (1) ou forment un plafond de la structure de support, et dans lequel le plancher d'étage (34) présente de préférence un évidement à travers lequel passe un escalier (19) situé dans le volume de transport.

3. Elément de pavillon (10) selon la revendication 1 ou 2, **caractérisé par le fait que** la structure de support (1) porte une enveloppe extérieure (11, 12, 13, 44) limitant le volume de transport à l'état de transport, en particulier une enveloppe extérieure (11, 12, 13, 44) fermée de tout côté à l'état de transport, dans lequel ladite enveloppe extérieure (11, 12, 13, 44) peut être déployée, à partir de l'état de transport, vers le haut et puis dans la direction d'extension (E) vers le côté dans l'état de manifestation de sorte qu'une partie de la salle pour manifestations, qui s'étend au-dessus du plancher d'étage (34) et du plancher d'extension (32, 33) à l'état de manifestation, est complètement couverte, de préférence de manière à donner une forme à peu près en L de l'enveloppe extérieure (11, 12, 13, 41, 42, 43, 51, 53, 54), qui, au moins à l'exception de fenêtres et d'entrées de personnes, est fermée sur plusieurs côtés et complètement couverte, dans lequel, sur le côté au premier étage qui est orienté vers la direction d'extension (E), soit, de préférence, on ne prévoit aucune paroi latérale (13) télescopique, on prévoit une paroi latérale (13) télescopique détachable, une paroi latérale (13) télescopique réalisée en tant que bâche enroulable, soit, plus préférablement, une paroi latérale (13) télescopique présentant des éléments particuliers de plaque (13a, 13b, 13d, 13e) reçus de manière à être déplaçables les uns contre les autres.

4. Elément de pavillon (10) selon l'une quelconque des revendications précédentes, **caractérisé par le fait qu'**un toit de base (42) est prévu qui est monté de manière mobile sur la structure de support (1) et est logé, à l'état de transport, à l'intérieur du volume de transport et qui, pour le montage et le démontage du pavillon pour manifestations (20; 30), est appuyé sur la structure de support (1) de manière à pouvoir être sorti et rentré verticalement dudit volume de transport ou bien dans le volume de transport afin de couvrir, dans un état où il est sorti verticalement, la partie de la surface pour manifestations, qui est située au-dessus de la surface de base.

5. Elément de pavillon (10) selon l'une quelconque des revendications précédentes, **caractérisé par le fait qu'**un toit d'extension (12) est prévu pour couvrir une partie de la surface pour manifestations située au-dessus du plancher d'extension (32, 33) déployé, toit d'extension (12) qui est monté de manière mobile sur ledit élément de pavillon (10), est logé à l'intérieur du volume de transport à l'état de transport et qui, pour le montage du pavillon pour manifestations (20; 30), peut être déployé par mouvement hors du volume de transport au-dessus du plancher d'extension (32, 33) déployé et être démonté par déplacement dans le volume de transport, dans lequel, de préférence, ledit toit d'extension (12) est contigu, à l'état déployé, audit toit de base (42) sorti verticalement, et dans lequel, de préférence, le toit d'extension (12) est reçu dans des guides linéaires (45) montés sur le toit de base (12), de manière à pouvoir être sorti et rentré dans la direction d'extension (E).

6. Elément de pavillon (10) selon la revendication 5, **caractérisé par le fait que** ledit toit d'extension (12) et au moins deux parois latérales (11) s'étendant le long de la direction d'extension ou structures d'appui verticales sur ces côtés sont reliés pour former une cellule d'extension (3) rigide, de préférence fermée sur plusieurs côtés, qui, à l'état de transport, est abritée comme un tout à l'intérieur du volume de transport et, qui, pour le montage et le démontage du pavillon pour manifestations (20; 30), est logée de manière à pouvoir être déplacée hors du volume de transport ou bien à être déplacée dans le volume de transport, en particulier logée de manière à pouvoir être sortie et rentrée horizontalement dans la direction d'extension (E) uniquement à l'état où le toit de base (42) ou bien la cellule de toit (2) est sorti(e) verticalement, afin de délimiter sur plusieurs côtés et de préférence envelopper, à l'état de manifestation, la partie de la surface pour manifestations, qui est située au-dessus du plancher d'extension (32, 33).

7. Elément de pavillon (10) selon la revendication 5 ou 6, **caractérisé par le fait que**, d'un côté, le toit de base (42) et le toit d'extension (12), de préférence le toit de base (42) et au moins les deux parois latérales (41) de la cellule de toit (2) qui s'étendent le long de la direction d'extension (E), ainsi que, de l'autre côté, le toit d'extension (12) et au moins les deux parois latérales (11) de la cellule d'extension (3) qui s'étendent le long de la direction d'extension (E) sont réalisés en tant que couches à recouvrement à la manière d'un toit coulissant.

8. Elément de pavillon (10) selon l'une quelconque des revendications précédentes, **caractérisé par le fait que** l'appui apte à être sorti et rentré verticalement du toit de base (42) ou bien de la cellule de toit (2) sur la structure de support (1) ou bien la capacité de déploiement vertical de l'enveloppe extérieure (11, 12, 13, 44) est réalisé(e) par l'intermédiaire d'une pluralité de broches filetées (66) qui, de préférence, sont aptes à être entraînées chacune par un moteur électrique (67) et par lesquelles des supports verticaux (68) du toit de base (42) ou bien de la cellule de toit (2) sont déplaçables dans la direction verticale.

9. Elément de pavillon (10) selon l'une quelconque des revendications précédentes, **caractérisé par le fait que** sur des poutres de plafond (16) de la structure de support (1) qui s'étendent dans la direction d'extension (E) sont fixés des rails de guidage linéaires (21) qui s'étendent au-dessous du plan de plancher du plancher d'extension (32, 33) ou bien du plancher d'étage (34), dans lesquels des tiges télescopiques (22) sont logées de manière à être guidées à déplacement dans la direction d'extension (E), qui forment une partie d'une structure de support de plancher (22, 28) pour le plancher d'extension (32, 33) et qui, de préférence, forment une partie d'une chaîne cinématique destinée à faire sortir et rentrer horizontalement ladite cellule d'extension (3).

10. Elément de pavillon (10) selon la revendication 9, **caractérisé par le fait que** la structure de support de plancher (22, 28) peut être reliée ou est reliée à degré de liberté dans la direction verticale, avantageusement sur les extrémités extérieures des tiges télescopiques (22), à la paroi latérale (13) de la cellule d'extension (3), qui est située dans la direction d'extension, dans lequel, de préférence, un dispositif de verrouillage (90) est prévu par lequel un support extérieur (28) de la structure de support de plancher (22, 28), lequel relie les extrémités extérieures des tiges télescopiques (22), peut être relié à et délié de la paroi latérale (13) de la cellule d'extension (3), qui est située dans la direction d'extension.

11. Elément de pavillon (10) selon l'une quelconque des revendications précédentes, **caractérisé par le fait que** le plancher d'extension (32, 33) est réalisé en tant que plancher pliant et présente deux éléments de plaque (32, 33) qui, à l'état de transport, sont disposés verticalement et de manière à être placés l'un contre l'autre par leurs grandes surfaces et qui, par exemple, sont reliés de façon articulée entre eux, dans lequel, à l'état de manifestation, lesdits éléments de plaque (32, 33) reposent sur les tiges télescopiques (22) et sont repliés vers le haut lorsque les tiges télescopiques (22) sont rentrées.

12. Elément de pavillon (10) selon la revendication 11, **caractérisé par le fait que**, à l'état replié, les éléments de plaque (32, 33) du plancher d'extension (32, 33) sont verrouillables entre eux ou l'un au moins des éléments de plaque (32, 33) peut être arrêté sur la cellule de toit (2), en particulier l'élément de plaque (33) extérieur dans la direction d'extension (E) par son extrémité inférieure à l'état replié, dans lequel, de préférence, le dispositif de verrouillage (90) est prévu qui est abrité dans le support extérieur (28) reliant les extrémités extérieures des tiges télescopiques (22), et dans lequel l'élément de plaque (33) extérieur dans la direction d'extension (E) est relié, par son extrémité inférieure à l'état replié, de façon articulée au support extérieur (28).

13. Elément de pavillon (10) selon l'une quelconque des revendications 9 à 12, **caractérisé par le fait que** les tiges télescopiques (22) sont réalisées en tant que crémaillères qui peuvent être entraînées via un arbre d'entraînement (23) commun s'étendant horizontalement transversalement à la direction d'extension (E), dans lequel l'arbre d'entraînement (23) est entraîné en particulier par un moteur électrique (24) reçu à l'intérieur du volume de transport.

14. Pavillon pour manifestations (20) qui est réalisé à partir d'au moins deux éléments de pavillon (10) selon l'une quelconque des revendications précédentes, dans lequel les deux éléments de pavillon (10) sont disposés parallèlement les uns à côté des autres par leurs côtés montrant dans la direction d'extension (E) et à une distance telle que les planchers d'extension (32, 33) ou bien les cellules d'extension (3) des deux éléments de pavillon (10) sont contigus l'un à l'autre à l'état de manifestation de sorte qu'une surface commune pour manifestations ou un intérieur commun est formé(e).

15. Pavillon pour manifestations (30) qui est réalisé à partir d'au moins deux éléments de pavillon (10) selon l'une quelconque des revendications précédentes, dans lequel les deux éléments de pavillon (10) sont disposés parallèlement les uns à côté des autres par leurs côtés montrant dans la direction d'extension (E), dans lequel un élément central de pavillon (40) est disposé entre les deux éléments de pavillon (10), qui présente, au niveau du plan de plancher des deux éléments de pavillon (10), un plancher d'étage reposant sur une structure de support, et/ou une cellule de toit apte à être sortie et rentrée verticalement par rapport à la structure de support et ayant deux côtés ouverts, les deux éléments de pavillon (10) étant disposés, par leurs côtés montrant dans la direction d'extension (E), à une distance telle que, à l'état de manifestation, les planchers d'extension (32, 33) ou bien les cellules d'extension (3) des deux éléments de pavillon (10) sont contigus au plancher d'étage ou bien aux côtés ouverts de la cellule de toit sortie de l'élément central de pavillon (40), de sorte qu'une surface commune pour manifestations ou un intérieur commun est formé(e).
